# EUROPEAN PATENT APPLICATION

(11) **EP 4 636 923 A1**
(43) Date of publication of application: **22.10.2025**
(21) Application number: 23948987.5
(22) Date of filing: 12.10.2023
(51) Int. Cl.: H01M 50/30, H01M 50/367

(54) **BATTERY CELL, BATTERY, AND ELECTRIC DEVICE**

(30) Priority: 16.08.2023 CN 202311034122
(71) Applicant: Contemporary Amperex Technology Co., Limited, Ningde, Fujian 352100 (CN)
(72) Inventor: WU, Kai, Ningde, Fujian 352100 (CN); HAN, Fengsheng, Ningde, Fujian 352100 (CN)
(74) Representative: Herrmann, Uwe
(86) International application number: PCT/CN2023/124316
(87) International publication number: WO 2025/035565

(57) **Abstract**

A battery cell, a battery, and an electric apparatus are capable of improving the reliability of the battery cell. The battery cell includes: a casing, having a first wall; a pressure relief mechanism, arranged on the first wall; an electrode assembly, accommodated in the casing; and a supporting member, arranged opposite to the pressure relief mechanism and configured to limit the electrode assembly from moving toward the first wall.

## Description

The present application claims priority to Chinese Patent Application No. 202311034122.8, filed with the China National Intellectual Property Administration on August 16, 2023 and entitled "Battery Cell, Battery, and Electric Apparatus", the entire content of which is incorporated herein by reference.

### TECHNICAL FIELD

Embodiments of the present application relate to the battery field, and more specifically, to a battery cell, a battery, and an electric apparatus.

### BACKGROUND

Energy conservation and emission reduction are key to sustainable development of the automotive industry. In this case, electric vehicles have become an important component of the sustainable development of the automotive industry due to advantages thereof in energy efficiency and environmental protection. For electric vehicles, a battery technology is an important factor for the development thereof.

With the development of battery technologies, various performance of batteries is continuously improved. During the use of batteries, the reliability of electrical performance of battery cells is an important factor for measuring the quality of the batteries. Therefore, how to improve the reliability of a battery cell is still a problem that needs to be solved.

### SUMMARY

Embodiments of the present application provide a battery cell, a battery, and an electric apparatus, so that the reliability of the battery cell can be improved.

According to a first aspect, a battery cell is provided, comprising a casing, having a first wall; and
a pressure relief mechanism, arranged on the first wall; an electrode assembly, accommodated in the casing; and a supporting member, arranged opposite to the pressure relief mechanism and configured to limit the electrode assembly from moving toward the first wall.

The supporting member is arranged opposite to the pressure relief mechanism, and can limit movement of the pressure relief mechanism when the electrode assembly moves toward the pressure relief mechanism. As such, the electrode assembly is not prone to blocking the pressure relief mechanism, and this is beneficial to the actuation of the pressure relief mechanism under the action of a high-temperature and high-pressure substance inside the battery cell, to quickly release the temperature or pressure inside the battery cell, thereby improving the reliability of the battery cell.

In some embodiments, a gas discharge channel that communicates the pressure relief mechanism with the electrode assembly is provided between the supporting member and the pressure relief mechanism.

In the embodiments of the present application, the discharge channel is beneficial to guiding the high-temperature and high-pressure substance to move toward the pressure relief mechanism, so that the pressure relief mechanism can be actuated to quickly discharge the high-temperature and high-pressure substance inside the battery cell. In addition, the supporting member may be configured to form the discharge channel, and limit deformation of the discharge channel, thereby reducing the possibility of the electrode assembly blocking the discharge channel, keeping the discharge channel clear to a certain extent, and improving the reliability of the battery cell.

In some embodiments, the battery cell comprises an insulating member, arranged between the electrode assembly and the first wall, the supporting member being connected to the insulating member.

In the embodiments of the present application, the insulating member can play an insulating role to insulate the electrode assembly from the first wall, and the connection between the supporting member and the insulating member can also reduce the possibility of the supporting member implementing conduction between the electrode assembly and the first wall.

In some embodiments, the supporting member is arranged between the first wall and the insulating member.

When the battery cell is in a normal use state, arranging the supporting member between the first wall and the insulating member can reduce the possibility of the electrode assembly coming into contact with the supporting member. In addition, the insulating member is beneficial to at least partially separating the supporting member from the electrode assembly, thereby improving the performance of insulation between the supporting member and the electrode assembly.

In some embodiments, the supporting member is connected to a surface of the insulating member that faces the first wall.

A portion of the supporting member that is connected to the insulating member can be insulated from the electrode assembly by using the insulating member. In addition, the portion of the supporting member that is connected to the insulating member is located between the insulating member and the first wall. This can reduce the possibility of misalignment of the supporting member when the supporting member is pressed by the electrode assembly, and strengthen the protection on the pressure relief mechanism by the supporting member.

In some embodiments, the insulating member comprises a first through hole, the first through hole is arranged opposite to the pressure relief mechanism in the thickness direction of the first wall, and the supporting member is at least partially accommodated in the first through hole.

In the embodiments of the present application, a high-temperature and high-pressure gas inside the battery cell can quickly reach, through the first through hole, a region in which the pressure relief mechanism is located, thereby facilitating actuation of the pressure relief mechanism to quickly release the temperature or pressure inside the battery cell. At least partially accommodating the supporting member in the first through hole also enables a certain gap to exist between the supporting member and the pressure relief mechanism, so that the discharge channel can be kept clear while the electrode assembly is limited from moving toward the first wall.

In some embodiments, a surface of the supporting member that faces the electrode assembly is provided with an insulating layer.

The insulating layer can improve the performance of insulation between the supporting member and the electrode assembly, and electric energy generated in the electrode assembly is not easily conducted to the first wall even when the electrode assembly comes into contact with the supporting member, thereby improving the reliability of the battery cell.

In some embodiments, the surface of the insulating member that faces the first wall is provided with a second groove, an accommodating space is formed between the second groove and the first wall, and the supporting member is accommodated in the accommodating space.

A protruding structure formed by the second groove on a side of the insulating member that faces the electrode assembly can protect the supporting member, so that the supporting member is not easy to fall off to a region in which the electrode assembly is located. In addition, the protruding structure can play an insulating role between the supporting member and the electrode assembly, thereby reducing the possibility of the supporting member implementing conduction between the electrode assembly and the first wall.

In some embodiments, the second groove has an opening in the length direction of the first wall and/or the width direction of the first wall, and the opening is configured to communicate the pressure relief mechanism with the electrode assembly.

The opening of the second groove in the length direction of the first wall and/or the width direction of the first wall is beneficial to guiding the high-temperature and high-pressure substance inside the battery cell to be quickly discharged toward a direction of the pressure relief mechanism, so as to quickly release the temperature or pressure inside the battery cell, thereby improving the reliability of the battery cell.

In some embodiments, in the thickness direction of the first wall, a projection of a bottom wall of the second groove covers a projection of the supporting member.

Covering the projection of the supporting member by the projection of the bottom wall of the second groove can prevent the electrode assembly from easily coming into direct contact with the supporting member during movement toward the first wall, thereby strengthening the insulation between the supporting member and the electrode assembly and improving the reliability of the battery cell.

In some embodiments, the supporting member comprises a supporting wall and at least one connecting portion that are connected to each other, the supporting wall is configured to limit the electrode assembly from moving toward the first wall, and the connecting portion is configured to connect the insulating member to the supporting wall.

Connecting the supporting member to the insulating member by using the connecting portion can enable a certain gap to exist between the supporting member and the pressure relief structure, and the supporting member can still reserve at least a portion of the discharge channel for the pressure relief mechanism while limiting movement of the electrode assembly, so that the high-temperature and high-pressure substance inside the battery cell can reach the pressure relief mechanism through the discharge channel.

In some embodiments, the connecting portion is clamped to the insulating member.

Connecting the connecting portion to the insulating member by clamping can relatively conveniently fasten the supporting member to the insulating member, and can additionally increase the fastening strength between the supporting member and the insulating member, so that the supporting member is not easily detached from the insulating member.

In some embodiments, the insulating member is provided with a first groove, a direction of an opening of the first groove is perpendicular to the thickness direction of the first wall, and the connecting portion is at least partially accommodated in the first groove.

The first groove can limit movement of the connecting portion, implement a fixed connection between the supporting member and the insulating member, and increase the connection strength between the supporting member and the insulating member, so that the supporting member is not easily detached from the insulating member.

In some embodiments, a surface of the insulating member is provided with a first protrusion, and the first groove is arranged in the first protrusion.

Arranging the first protrusion on the surface of the insulating member and arranging the first groove in the first protrusion can increase the strength of the insulating member and improve a limiting function between the insulating member and the supporting member. In addition, correspondingly thickening the connecting portion can also increase the strength of the supporting member, so that the supporting member is not easily damaged when being pressed by the electrode assembly, thereby limiting the movement of the electrode assembly to a limited extent.

In some embodiments, a portion of the connecting portion that is accommodated in the first groove is provided with a first step structure, the first groove has a second step structure, and the first step structure and the second step structure mate with each other.

In an assembly process, the narrower portion of the first step structure first passes through the wider portion of the second step structure and then extends into the narrower portion of the second step structure, and the mating between the first step structure and the second step structure is beneficial to guiding the connecting wall to be accommodated in the first groove, thereby reducing the positioning accuracy in the assembly process.

In some embodiments, the connecting portion is connected to the surface of the insulating member that faces the first wall.

The connection between the connecting portion and the surface of the insulating member that faces the first wall can enable the supporting member to be fastened by both the first wall and the insulating member, so that the supporting member is not easily misaligned when being pressed by the electrode assembly, and can play a certain protective role for the pressure relief mechanism at a position opposite to the pressure relief mechanism.

In some embodiments, the connecting portion is connected to a surface of the insulating member that faces the electrode assembly.

The supporting wall can limit deformation of the electrode assembly, so that the electrode assembly is difficult to move further toward the pressure relief mechanism, and the connecting portion can connect the supporting wall to the insulating member. As such, the supporting member can limit the deformation of the electrode assembly at a fixed position, so that a certain gap can be maintained between the electrode assembly and the pressure relief mechanism, thereby keeping the discharge channel clear.

In some embodiments, the connecting portion comprises at least one first connecting wall parallel to the thickness direction of the first wall, and the first connecting wall is configured to form a gap between the insulating member and the supporting wall.

A gap between the first connecting wall and the first wall can maintain a certain discharge channel in a region around the pressure relief mechanism, so that the high-temperature and high-pressure substance can reach the pressure relief mechanism along the discharge channel, and further the pressure relief mechanism is actuated to discharge the high-temperature and high-pressure substance inside the battery cell.

In some embodiments, the connecting portion comprises a second connecting wall, and the second connecting wall connects the first connecting wall to the insulating member.

The second connecting wall can increase the connection area between the supporting member and the insulating member. This is beneficial to increasing the connection strength between the supporting member and the insulating member, so that the supporting member is not easily deformed or detached from the insulating member when being pressed by the electrode assembly, thereby effectively limiting the movement of the electrode assembly.

In some embodiments, the at least one first connecting wall comprises two first connecting walls, and the two first connecting walls are arranged opposite to each other at edges of the supporting wall.

The first connecting walls arranged opposite to each other can make the connection between the supporting member and the insulating member more stable, and the supporting member and the insulating member less prone to deformation in a process of limiting the movement of the electrode assembly, thereby helping better limit the movement of the electrode assembly.

In some embodiments, the first connecting walls each have a run-through hole, and the run-through hole is configured to communicate the pressure relief mechanism with the electrode assembly.

The run-through hole can increase a discharge channel and a discharge path inside the battery cell, and this is beneficial to guiding the high-temperature and high-pressure substance inside the battery cell to flow toward the direction of the pressure relief mechanism, so that the pressure relief mechanism can be actuated to quickly discharge the high-temperature and high-pressure substance, and the possibility of more serious explosion accidents can be reduced, thereby improving the reliability of the battery cell.

In some embodiments, a projection of the supporting wall in the thickness direction of the first wall covers a projection of the pressure relief mechanism in the thickness direction of the first wall.

The supporting member can protect the pressure relief mechanism in a larger range, so that during movement toward the first wall, the electrode assembly is limited by the supporting member in one aspect, and is difficult to directly move to the pressure relief mechanism to block the pressure relief mechanism in another aspect, thereby keeping the discharge channel inside the battery cell clear and improving the reliability of the battery cell.

In some embodiments, the supporting member is connected to a surface of the first wall that faces the electrode assembly in the thickness direction of the first wall.

The connection between the supporting member and the first wall can implement more direct protection on the pressure relief mechanism, thereby reducing the possibility of blocking the pressure relief mechanism during the movement of the electrode assembly toward the first wall, and helping improve the reliability of the battery cell.

In some embodiments, the supporting member comprises a supporting wall and at least one connecting portion that are connected to each other, the supporting wall is configured to limit the electrode assembly from moving toward the first wall, and the connecting portion is configured to connect the first wall to the supporting wall.

The connecting portion in the supporting member can implement the connection between the first wall and the supporting member, and the supporting wall can keep the discharge channel inside the battery cell clear while limiting the movement of the electrode assembly, so that the pressure relief mechanism can be actuated under the action of the high-temperature and high-pressure substance inside the battery cell.

In some embodiments, the connecting portion comprises at least one first connecting wall parallel to the thickness direction of the first wall, and the first connecting wall is configured to form a gap between the first wall and the supporting wall.

A gap between the first connecting wall and the first wall can maintain a certain discharge channel in a region around the pressure relief mechanism, so that the high-temperature and high-pressure substance can reach the pressure relief mechanism along the discharge channel, and further the pressure relief mechanism is actuated to discharge the high-temperature and high-pressure substance inside the battery cell.

In some embodiments, the connecting portion comprises a second connecting wall, and the second connecting wall connects the first connecting wall to the first wall.

The second connecting wall can increase the connection area between the supporting member and the insulating member. This is beneficial to increasing the connection strength between the supporting member and the first wall, so that the supporting member is not easily deformed or detached from the insulating member when being pressed by the electrode assembly, thereby effectively limiting the movement of the electrode assembly.

In some embodiments, the at least one first connecting wall comprises two first connecting walls, and the two first connecting walls are arranged opposite to each other at edges of the supporting wall.

The first connecting walls arranged opposite to each other can make the connection between the supporting member and the first wall more stable, and the supporting member and the first wall less prone to deformation in a process of limiting the movement of the electrode assembly, thereby helping better limit the movement of the electrode assembly.

In some embodiments, the first connecting walls each have a run-through hole, and the run-through hole is configured to communicate the pressure relief mechanism with the electrode assembly.

The run-through hole can increase a discharge channel and a discharge path inside the battery cell, and this is beneficial to guiding the high-temperature and high-pressure substance inside the battery cell to flow toward the direction of the pressure relief mechanism, so that the pressure relief mechanism can be actuated to quickly discharge the high-temperature and high-pressure substance, and the possibility of more serious explosion accidents can be reduced, thereby improving the reliability of the battery cell.

In some embodiments, a projection of the supporting wall in the thickness direction of the first wall covers a projection of the pressure relief mechanism in the thickness direction of the first wall.

The supporting member can protect the pressure relief mechanism in a larger range, so that during movement toward the first wall, the electrode assembly is limited by the supporting member in one aspect, and is difficult to directly move to the pressure relief mechanism to block the pressure relief mechanism in another aspect, thereby keeping the discharge channel inside the battery cell clear and improving the reliability of the battery cell.

In some embodiments, the battery cell comprises an insulating member, arranged between the electrode assembly and the first wall.

The insulating member can play an insulating role to insulate the electrode assembly from the first wall, thereby reducing the possibility of conduction between the electrode assembly and the first wall.

In some embodiments, the insulating member comprises a first through hole, the first through hole is arranged opposite to the pressure relief mechanism in the thickness direction of the first wall, and the supporting member is at least partially accommodated in the first through hole.

In the embodiments of the present application, a high-temperature and high-pressure gas inside the battery cell can quickly reach, through the first through hole, a region in which the pressure relief mechanism is located, thereby facilitating actuation of the pressure relief mechanism to quickly release the temperature or pressure inside the battery cell. At least partially accommodating the supporting member in the first through hole also enables a certain gap to exist between the supporting member and the pressure relief mechanism, so that the discharge channel can be kept clear while the electrode assembly is limited from moving toward the first wall.

In some embodiments, a surface of the supporting member that faces the electrode assembly is provided with an insulating layer.

The insulating layer can improve the performance of insulation between the supporting member and the electrode assembly, and electric energy generated in the electrode assembly is not easily conducted to the first wall even when the electrode assembly comes into contact with the supporting member, thereby improving the reliability of the battery cell.

In some embodiments, the surface of the insulating member that faces the first wall is provided with a second groove, an accommodating space is formed between the second groove and the first wall, and the supporting member is accommodated in the accommodating space.

A protruding structure formed by the second groove on a side of the insulating member that faces the electrode assembly can protect the supporting member, so that the supporting member is not easy to fall off to a region in which the electrode assembly is located. In addition, the protruding structure can play an insulating role between the supporting member and the electrode assembly, thereby reducing the possibility of the supporting member implementing conduction between the electrode assembly and the first wall.

In some embodiments, the second groove has an opening in the length direction of the first wall and/or the width direction of the first wall, and the opening is configured to communicate the pressure relief mechanism with the electrode assembly.

The opening of the second groove in the length direction of the first wall and/or the width direction of the first wall is beneficial to guiding the high-temperature and high-pressure substance inside the battery cell to be quickly discharged toward a direction of the pressure relief mechanism, so as to quickly release the temperature or pressure inside the battery cell, thereby improving the reliability of the battery cell.

In some embodiments, in the thickness direction of the first wall, a projection of a bottom wall of the second groove covers a projection of the supporting member.

Covering the projection of the supporting member by the projection of the bottom wall of the second groove can prevent the electrode assembly from easily coming into direct contact with the supporting member during movement toward the first wall, thereby strengthening the insulation between the supporting member and the electrode assembly and improving the reliability of the battery cell.

In some embodiments, a melting point of the supporting member is higher than a melting point of the insulating member.

In the same temperature environment, the supporting member is less prone to being fused or melted than the insulating member, can maintain an original shape and position inside the battery cell, and can limit the electrode assembly moving toward the pressure relief mechanism, so that the electrode assembly is difficult to move to a position at which the electrode assembly blocks the discharge channel, thereby limiting the deformation of the discharge channel, providing a discharge channel reaching the pressure relief mechanism for the high-temperature and high-pressure substance, and helping improve the reliability of the battery cell.

In some embodiments, the melting point of the supporting member is greater than 100°C.

In the embodiments of the present application, using a supporting member with a melting point greater than 100°C is beneficial to preventing the supporting member from being easily melted upon thermal runaway of the battery cell, and then a gas discharge channel communicating with the pressure relief mechanism can be further formed between the first wall and the electrode assembly, so that a thermal runaway gas can be discharged to the outside of the battery cell through the pressure relief mechanism in time, thereby helping improve the reliability of the battery cell.

According to a second aspect, a battery is provided, comprising the battery cell according to any one of the embodiments of the first aspect.

According to a third aspect, an electric apparatus is provided, comprising the battery according to any one of the embodiments of the second aspect, where the battery is configured to supply electric energy to the electric apparatus.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For those of ordinary skill in the art, other drawings can also be obtained from the drawings without creative work.
FIG. 1 is a schematic structural diagram of a vehicle according to embodiments of the present application.
FIG. 2 is a schematic structural diagram of a battery according to embodiments of the present application.
FIG. 3 is a schematic structural diagram of a battery cell according to embodiments of the present application.
FIG. 4 is a schematic structural diagram of another battery cell according to embodiments of the present application.
FIG. 5 is a schematic structural diagram of an insulating member and a supporting member that face a side of a first wall in the thickness direction of the first wall according to embodiments of the present application.
FIG. 6 is a schematic structural diagram of the structure in FIG. 5 facing a side of an electrode assembly in the thickness direction of the first wall.
FIG. 7 is a cross-sectional view of the structure in FIG. 5 in an A-A direction.
FIG. 8 is another schematic structural diagram of an insulating member and a supporting member that face a side of an electrode assembly in the thickness direction of the first wall according to embodiments of the present application.
FIG. 9 is an enlarged schematic structural diagram of a portion M in FIG. 8.
FIG. 10 is a cross-sectional view of the structure in FIG. 8 in a B-B direction.
FIG. 11 is a schematic structural diagram of a supporting member according to embodiments of the present application.
FIG. 12 is another schematic structural diagram of an insulating member and a supporting member that face a side of an electrode assembly in the thickness direction of the first wall according to embodiments of the present application.
FIG. 13 is a cross-sectional view of the structure in FIG. 12 in a C-C direction.
FIG. 14 is an enlarged schematic structural diagram of a portion N in FIG. 13.

In the drawings, the figures are not drawn to actual scale.

### DESCRIPTION OF EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

In the description of the present application, it should be noted that, orientations or positional relationships indicated by the terms "upper", "lower", "left", "right", "inner", "outer", and the like are merely for convenience of description of the present application and simplicity of description, and do not indicate or imply that an apparatus or an element to be referred to must have a specific orientation, or be constructed and operated in a specific orientation, and therefore should not be understood as a limitation on the present application. In addition, the terms "first", "second", "third", and the like are used merely for description purposes, and should not be understood as an indication or implication of relative importance. "Perpendicular" is not perpendicular in the strict sense, but is within an allowable range of error. "Parallel" is not parallel in the strict sense, but is within an allowable range of error. Unless otherwise defined, all technical and scientific terms used in the present application have the same meaning as commonly understood by those skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion.

The orientation words appearing in the following description are all directions shown in the drawings, and do not limit the specific structure in the present application. In the description of the present application, it should be further noted that, unless explicitly specified and defined otherwise, the terms "mounted", "connected", and "connect" are to be understood in a broad sense, for example, may be fixedly connected, detachably connected, or integrally connected, may be directly connected, or may be indirectly connected through an intermediate medium. Those of ordinary skill in the art may understand specific meanings of these terms in the present application according to specific situations.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the present application, the term "and/or" only describes an association relationship between associated objects, and indicates that three relationships may exist. For example, "A and/or B" may indicate the following three cases: A exists, both A and B exist, and B exists. In addition, the symbol "/" in the present application generally represents an "or" relationship between associated objects.

In the present application, "plurality of" means more than two (inclusive). Similarly, "plurality of groups" means more than two (inclusive) groups, and "plurality of pieces" means more than two (inclusive) pieces.

In the embodiments of the present application, the same reference numerals denote the same component, and a detailed description of the same component is omitted in different embodiments for sake of brevity. It should be understood that the size of various components, such as the thickness, length, and width, and the size of the integrated apparatus, such as the overall thickness, length, and width, in the embodiments of the present application shown in the figures are merely illustrative and should not be construed as limiting the present application.

In the present application, the battery cell may include a lithium-ion battery, a lithium-ion primary battery, a lithium-sulfur battery, a sodium lithium-ion battery, a sodium ion battery, a lithium metal battery or a magnesium ion battery, or the like, which is not limited in the embodiments of the present application. The battery cell may be in a shape of a cylinder, a flat body, a cuboid, or the like, which is not limited in the embodiments of the present application. The battery cell is generally classified into three types according to a packaging manner: a cylindrical battery cell, a square battery cell, and a pouch battery cell, which is not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, or the like. The battery generally includes a case for encapsulating one or more battery cells. The box body can prevent liquids or other foreign objects from affecting the charging or discharging of the battery cells.

The battery cell includes an electrode assembly and an electrolyte solution. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is coated on a surface of the positive electrode current collector. The positive electrode current collector not coated with the positive electrode active substance layer protrudes from the positive electrode current collector coated with the positive electrode active substance layer, and the positive electrode current collector not coated with the positive electrode active substance layer is a positive electrode tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is coated on a surface of the negative electrode current collector. The negative electrode current collector not coated with the negative electrode active substance layer protrudes from the negative electrode current collector coated with the negative electrode active substance layer, and the negative electrode current collector not coated with the negative electrode active substance layer is a negative electrode tab. The negative electrode current collector may be made of copper, and a negative electrode active substance may be carbon, silicon, a lithium metal or a lithium alloy, or the like. To ensure that a large current passes through without any fusing, a plurality of positive electrode tabs are provided and stacked together, and a plurality of negative electrode tabs are provided and stacked together. The separator may be made of polypropylene (PP), polyethylene (PE), or the like. In addition, the electrode assembly in the embodiments of the present application includes, but is not limited to, a winding type structure or a stacking type structure.

During the use of a battery cell, the battery cell may generate a large amount of high-temperature and high-pressure substance such as a thermal runaway gas due to an external mechanical force, an internal chemical reaction, or another cause, and the high-temperature and high-pressure substance needs to reach a pressure relief structure through a discharge channel formed by through holes arranged on an electrode assembly and another structure inside the battery cell, and a high temperature or a high pressure makes the pressure relief mechanism be actuated to release the high-temperature and high-pressure substance inside the battery cell. However, as energy density of the battery cell continuously increases, a thermal runaway rate of the battery cell keeps growing, and a gas production rate and a gas production amount are significantly increased. When the gas production rate and the gas production amount are sufficiently high, the electrode assembly may be driven by the high-temperature and high-pressure substance to move toward a direction of the pressure relief mechanism, and block the pressure relief mechanism. Consequently, the pressure relief mechanism cannot be normally actuated, and the high-temperature and high-pressure substance cannot be quickly discharged. In this case, the battery cell is easily cracked, and the reliability of the battery cell greatly deteriorates.

In view of this, an embodiment of the present application provides a battery cell. The battery cell is provided with a supporting member, and the supporting member is arranged opposite to a pressure relief mechanism, so that even if an electrode assembly is driven by a high-temperature and high-pressure substance to move toward a direction of the pressure relief mechanism, the supporting member can limit the movement of the electrode assembly toward the pressure relief mechanism, and reduce a distance of the movement of the electrode assembly toward the pressure relief mechanism. As such, the electrode assembly is difficult to move to a position at which the electrode assembly blocks the pressure relief mechanism, thereby keeping a discharge channel clear, helping increase a discharge speed of the high-temperature and high-pressure substance inside the battery cell, and improving the reliability of the battery cell.

The technical solutions described in the embodiments of the present application are all applicable to various electrical apparatus using batteries. The electric apparatus may be a vehicle, a mobile phone, a portable device, a notebook computer, a ship, a spacecraft, an electric toy, an electric tool, and the like. The vehicle may be a fuel vehicle, a gas vehicle, or a new energy vehicle which may be a pure electric vehicle, a hybrid vehicle, a range-extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. The embodiments of the present application include, but are not limited to thereto the electric apparatus above.

To facilitate description, in the following embodiments, a vehicle is used as an example of the electric apparatus.

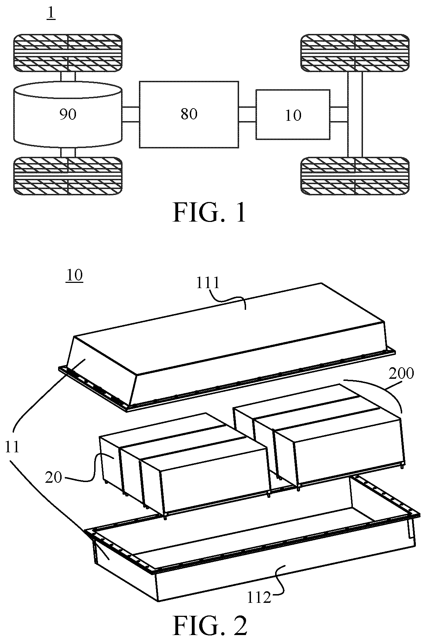

As shown in FIG. 1, FIG. 1 is a schematic structural diagram of a vehicle 1 according to an embodiment of the present application. The vehicle 1 may be a fuel vehicle, a gas vehicle, or a new energy vehicle, and the new energy vehicle may be a battery electric vehicle, a hybrid electric vehicle, or a range-extended electric vehicle, or the like. A motor 90, a controller 80, and a battery 10 may be arranged inside the vehicle 1. The controller 80 is configured to control the battery 10 to supply power to the motor 90. For example, the battery 10 may be arranged at the bottom or at the head or at the tail of the vehicle 1. The battery 10 may be configured to supply power to the vehicle 1, for example, the battery 10 may be used as an operating power source for the vehicle 1, used for a circuit system of the vehicle 1, for example, used for operating power requirements for starting, navigation, and running of the vehicle 1. In another embodiment of the present application, the battery 10 may be used not only as the operating power source of the vehicle 1, but also as a driving power source of the vehicle 1, instead of or partially instead of fuel or natural gas to provide driving power to the vehicle 1.

To meet different power requirements, the battery may include a plurality of battery cells, where the plurality of battery cells may be connected through series connection, parallel connection or parallel-series connection, and the parallel-series connection refers to a mixture of series connection and parallel connection. The battery may also be referred to as a battery pack. Optionally, the plurality of battery cells may first form a battery module through series connection, parallel connection, or parallel-series connection, and then a plurality of battery modules form the battery through series connection, parallel connection, or parallel-series connection. That is, the plurality of battery cells may directly constitute the battery, or may constitute the battery module first, and the battery module constitutes the battery.

For example, FIG. 2 shows a schematic structural diagram of a battery 10 according to an embodiment of the present application, and the battery 10 may include at least one battery module 200. The battery module 200 includes a plurality of battery cells 20. The battery 10 may further include a case 11, an interior of the case 11 is of a hollow structure, and the plurality of battery cells 20 are accommodated in the case 11. FIG. 2 shows a possible implementation of the case 11 according to an embodiment of the present application. As shown in FIG. 2, the case 11 may include two portions, which are referred to as a first portion 111 and a second portion 112, respectively, and the first portion 111 and the second portion 112 are buckled together. The shapes of the first portion 111 and the second portion 112 may be determined based on the shape of the battery modules 200 combined, and at least one of the first portion 111 and the second portion 112 has an opening. For example, as shown in FIG. 2, the first portion 111 and the second portion 112 each may be a hollow cuboid with only one face being an opening face, an opening of the first portion 111 and an opening of the second portion 112 are arranged opposite to each other, and the first portion 111 and the second portion 112 are buckled with each other to form the case 11 having a closed chamber.

For another example, different from FIG. 2, only one of the first portion 111 and the second portion 112 may be a hollow cuboid having an opening, and the other may be a plate to cover the opening. For example, here, taking an example in which the second portion 112 is a hollow cuboid with only one face being an opening face and the first portion 111 is a plate, the first portion 111 covers the opening of the second portion 112 to form a case 11 having a closed chamber which may be configured to accommodate a plurality of battery cells 20. The plurality of battery cells 20 combined through series connection, parallel connection or parallel-series connection with each other are arranged in the case 11 formed by buckling the first portion 111 and the second portion 112.

Optionally, the battery 10 may further include other structures, which are not described in detail herein. For example, the battery 10 may further include a bus bar component for implementing an electrical connection between the plurality of battery cells 20, such as parallel connection, series connection, or parallel-series connection. Specifically, the bus bar component may implement an electrical connection between the battery cells 20 by connecting the electrode terminals of the battery cells 20. Further, the bus bar component may be fixed to the electrode terminal of the battery cell 20 by welding. The electric energy of the plurality of battery cells 20 may be further led out through the case 11 by a conductive structure.

The number of the battery cells 20 in the battery module 200 may be set to any number according to different power requirements. The plurality of battery cells 20 may be connected through series connection, parallel connection or parallel-series connection to achieve larger capacity or power. Since the number of the battery cells 20 included in each battery 10 may be great, the battery cells 20 are arranged in groups for easy installation, and each group of the battery cells 20 constitutes the battery module 200. The number of the battery cells 20 included in the battery module 200 is not limited and may be set according to requirements. The battery 10 may include a plurality of battery modules 200, and the battery modules 200 may be connected through series connection, parallel connection or series-parallel connection.

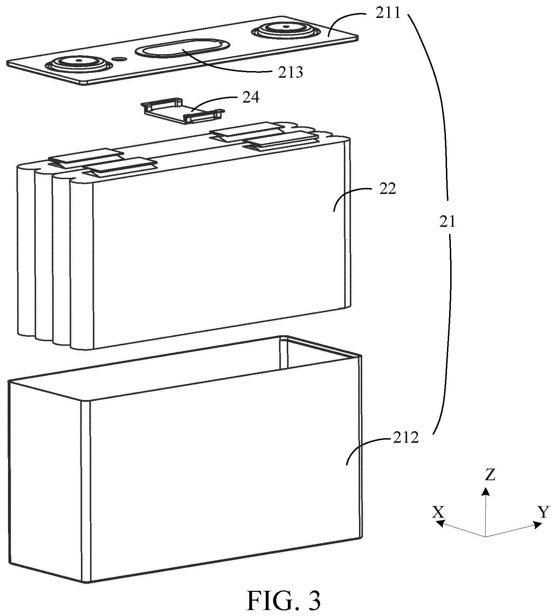

FIG. 3 shows an exploded schematic structural diagram of a battery cell 2020 according to an embodiment of the present application. As shown in FIG. 3, the battery cell 20 includes a casing 21, a pressure relief mechanism 213, an electrode assembly 22, and a supporting member 24.

The electrode assembly 22 is accommodated in the casing 21, the casing 21 has a first wall 211, and the pressure relief mechanism 213 is arranged on the first wall 211. The supporting member 24 is arranged opposite to the pressure relief mechanism 213 and configured to limit the electrode assembly 22 from moving toward the first wall 211.

The battery cell 20 may include the casing 21 and one or more electrode assemblies 22. The casing 21 may have a plurality of walls, and the first wall 211 refers to one or more walls of the casing 21. The casing 21 of the battery cell 20 may be determined based on the shape of the one or more electrode assemblies 22 combined, for example, the casing 21 may be a cuboid, a cube, or a cylinder. The casing 21 may include the first wall 211 and a housing 212. The housing 212 may be a hollow structure. For example, the housing 212 may be a hollow cuboid, cube, or cylinder, and one of faces of the housing 212 has an opening, so that the one or more electrode assemblies 22 may be placed inside the housing 212. For example, when the housing 212 is a hollow cuboid or cube, one of planes of the housing 212 is an opening face, that is, the plane does not have a wall body, so that the inside and outside of the housing 212 communicate with each other. When the housing 212 is a hollow cylinder, an end face of the housing 212 is an opening face, i.e., the end face has no wall body, so that the inside and outside of the housing 212 communicate with each other. The first wall 211 covers the opening and is connected to the housing 212 to form a closed cavity for accommodating the electrode assembly 22. The housing 212 is filled with an electrolyte, for example, an electrolyte solution.

The electrode assembly 22 is a component in the battery cell 20 in which an electrochemical reaction occurs. The electrode assembly 22 may be a cylinder, a cuboid, or the like. If the electrode assembly 22 is a cylinder structure, the housing 212 may also be a cylinder structure. If the electrode assembly 22 is a cuboid structure, the housing 212 may also be a cuboid structure. In this embodiment of the present application, a cuboid housing 212 is used as an example for ease of description. For any one electrode assembly 22, the electrode assembly 22 may include at least two tabs. The at least two tabs may include at least one positive electrode tab and at least one negative electrode tab. The positive electrode tab may be formed by stacking portions on a positive electrode plate that are not coated with a positive electrode active substance layer, and the negative electrode tab may be formed by stacking portions on a negative electrode plate that are not coated with a negative electrode active substance layer.

The battery cell 20 may further include the pressure relief mechanism 213, and the pressure relief mechanism 213 may be actuated when a temperature and/or pressure inside the battery cell 20 reaches a threshold, to release the temperature and/or pressure inside the battery cell 20. "Actuate" mentioned in the embodiments of the present application refers to that the pressure relief mechanism 213 takes an action or is activated in a state such that the internal pressure and temperature of the battery cell 20 is released. The action taken by the pressure relief mechanism 213 may include, but is not limited to, breaking, rupturing, tearing, or opening, etc. of at least a portion of the pressure relief mechanism 213. When the pressure relief mechanism 213 is actuated, a high-temperature and high-pressure substance inside the battery cell 20 is discharged outward from an actuated portion as an emission. In this way, the battery cell 20 can release the pressure and temperature under controllable pressure or temperature conditions, thereby reducing the possibility of accidents. The emission from the battery cell 20 mentioned in the embodiments of the present application include but is not limited to: an electrolyte solution, dissolved or split positive and negative electrode plates, fragments of a separator, a high-temperature and high-pressure gas generated by a reaction, a flame, and so on.

The supporting member 24 is arranged opposite to the pressure relief mechanism 213, and specifically, may be arranged opposite to the pressure relief mechanism 213 in the thickness direction Z of the first wall 211. As shown in FIG. 3, the supporting member 24 may be arranged between the first wall 211 and the electrode assembly 22. The supporting member 24 is a structure with certain rigidity, and has certain deformation resistance under the action of an external force. When a large amount of high-temperature and high-pressure substance is generated inside the battery cell 20, the electrode assembly 22 moves toward the pressure relief mechanism 213 when being driven by the high-temperature and high-pressure substance. The supporting member 24 can maintain an original structure and shape unchanged to some extent when being pressed by the electrode assembly 22, and the electrode assembly 22 is limited from further moving toward the pressure relief mechanism 213 at a position of the supporting member 24.

The supporting member 24 is arranged opposite to the pressure relief mechanism 213, and can limit movement of the pressure relief mechanism 213 when the electrode assembly 22 moves toward the pressure relief mechanism 213. As such, the electrode assembly 22 is not prone to blocking the pressure relief mechanism 213, and this is beneficial to the actuation of the pressure relief mechanism 213 under the action of a high-temperature and high-pressure substance inside the battery cell 20, to quickly release the temperature or pressure inside the battery cell 20, thereby improving the reliability of the battery cell 20.

According to some embodiments of the present application, optionally, a discharge channel that communicates the pressure relief mechanism 213 with the electrode assembly 22 is provided between the supporting member 24 and the pressure relief mechanism 213.

A certain gap may exist between the supporting member 24 and the pressure relief mechanism 213, for example, a certain gap may exist between the supporting member 24 and the pressure relief mechanism 213 in the thickness direction Z of the first wall 211, and the pressure relief mechanism 213 communicates with the gap. The gap also communicates with a region in which the electrode assembly 22 is located. In this case, a region in which the pressure relief mechanism 213 is located also communicates with the region in which the electrode assembly 22 is located, to form the discharge channel between the pressure relief mechanism 213 and the electrode assembly 22. When a high-temperature and high-pressure substance is generated inside the battery cell 20, the high-temperature and high-pressure substance can reach the pressure relief mechanism 213 through the discharge channel, so that the pressure relief mechanism 213 is actuated.

In the embodiments of the present application, the discharge channel is beneficial to guiding the high-temperature and high-pressure substance to move toward the pressure relief mechanism 213, so that the pressure relief mechanism 213 can be actuated to quickly discharge the high-temperature and high-pressure substance inside the battery cell 20. In addition, the supporting member 24 may be configured to form the discharge channel, and limit deformation of the discharge channel, thereby reducing the possibility of the electrode assembly 22 blocking the discharge channel, keeping the discharge channel clear to a certain extent, and improving the reliability of the battery cell 20.

According to some embodiments of the present application, optionally, the battery cell 20 includes an insulating member 23, the insulating member 23 is arranged between the electrode assembly 22 and the first wall 211, and the supporting member 24 is connected to the insulating member 23.

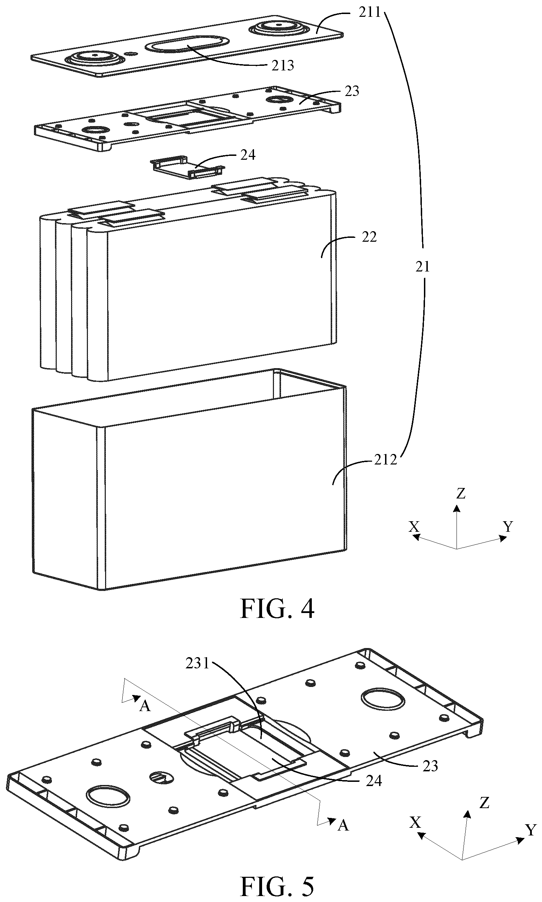

As shown in FIG. 4, FIG. 4 is merely used to show that the insulating member 23 is arranged between the electrode assembly 22 and the first wall 211, and relative positions of the insulating member 23 and the supporting member 24 are not limited. For example, the supporting member 24 may be arranged between the insulating member 23 and the first wall 211, or may be arranged between the insulating member 23 and the electrode assembly 22, or optionally may be arranged between the first wall 211 and the electrode assembly 22 after passing through the insulating member 23.

The insulating member 23 may be configured to insulate the electrode assembly 22 from the first wall 211, thereby reducing the possibility of the first wall 211 being charged. Optionally, the material of the insulating member 23 may include a polypropylene (PP) material, a polyphenylene sulfide (PPS) material, a soluble polyfluoroalkoxy (PFA) material, or the like.

The insulating member 23 may have a through hole to form at least a portion of the discharge channel, and this portion of the discharge channel communicates the pressure relief mechanism 213 with the electrode assembly 22. Specifically, the through hole may be arranged opposite to the pressure relief mechanism 213 in the thickness direction Z of the first wall 211.

In some embodiments, the supporting member 24 may be connected to the insulating member 23. Specifically, in one aspect, the supporting member 24 may be connected to the insulating member 23 by injection molding, welding, bonding, clamping, or the like; and in another aspect, the supporting member 24 may be connected to a surface of the insulating member 23 that faces the first wall 211 in the thickness direction Z of the first wall 211 or a surface of the insulating member 23 that faces the electrode assembly 22 in the thickness direction Z of the first wall 211. Optionally, the supporting member 24 may alternatively be at least partially accommodated in an accommodating space formed by the insulating member 23.

In the embodiments of the present application, the insulating member 23 can play an insulating role to insulate the electrode assembly 22 from the first wall 211, and the connection between the supporting member 24 and the insulating member 23 can also reduce the possibility of the supporting member 24 implementing conduction between the electrode assembly 22 and the first wall 211.

According to some embodiments of the present application, optionally, the supporting member 24 is arranged between the first wall 211 and the insulating member 23.

In some embodiments, the surface of the insulating member 23 that faces the first wall 211 in the thickness direction Z of the first wall 211 may be provided with an avoidance space. In this case, the avoidance space is arranged between the first wall 211 and the insulating member 23. The avoidance space may be arranged opposite to the pressure relief mechanism 213, and the supporting member 24 is accommodated in the avoidance space. In some embodiments, when the supporting member 24 is accommodated in the avoidance space, a certain gap may still exist between the supporting member 24 and the pressure relief mechanism 213, and the gap can communicate the pressure relief mechanism 213 with the electrode assembly 22 to form at least a portion of the discharge channel.

When the battery cell 20 is in a normal use state, arranging the supporting member 24 between the first wall 211 and the insulating member 23 can reduce the possibility of the electrode assembly 22 coming into contact with the supporting member 24. In addition, the insulating member 23 is beneficial to at least partially separating the supporting member 24 from the electrode assembly 22, thereby improving the performance of insulation between the supporting member 24 and the electrode assembly 22.

According to some embodiments of the present application, optionally, the supporting member 24 is connected to the surface of the insulating member 23 that faces the first wall 211.

FIG. 5 shows a structure in which the supporting member 24 is connected to the surface of the insulating member 23 that faces the first wall 211. As shown in FIG. 5, in some embodiments, an edge of the supporting member 24 may be connected to the insulating member 23, for example, two opposite edges of the supporting member 24 are connected to the insulating member 23.

In some embodiments, a portion of the supporting member 24 that is connected to the insulating member 23 may be attached to the first wall 211 to increase the connection strength between the supporting member 24 and the insulating member 23. A certain gap may exist between a portion of the supporting member 24 that is not connected to the insulating member 23 and the pressure relief mechanism 213 to form the discharge channel that communicates the pressure relief mechanism 213 with the electrode assembly 22.

The portion of the supporting member 24 that is connected to the insulating member 23 can be insulated from the electrode assembly 22 by using the insulating member 23. In addition, the portion of the supporting member 24 that is connected to the insulating member 23 is located between the insulating member 23 and the first wall 211. This can reduce the possibility of misalignment of the supporting member 24 when the supporting member 24 is pressed by the electrode assembly 22, and strengthen the protection on the pressure relief mechanism 213 by the supporting member 24.

According to some embodiments of the present application, optionally, the insulating member 23 includes a first through hole 231, the first through hole 231 is arranged opposite to the pressure relief mechanism 213 in the thickness direction Z of the first wall 211, and the supporting member 24 is at least partially accommodated in the first through hole 231.

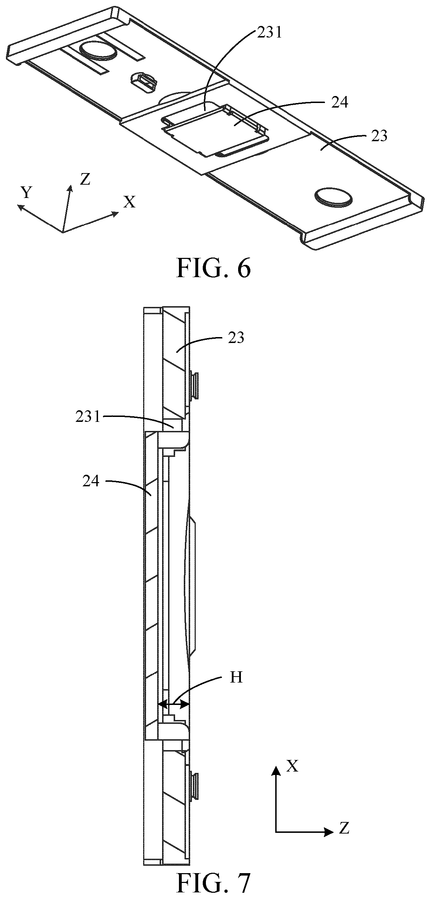

FIG. 5 shows a structure in which the insulating member 23 and the supporting member 24 face a side of the first wall 211 in the thickness direction Z of the first wall 211. FIG. 6 shows a structure in which the insulating member 23 and the supporting member 24 face a side of the electrode assembly 22 in the thickness direction Z of the first wall 211. FIG. 7 shows a cross-sectional view of the structure in FIG. 5 in an A-A direction.

As shown in FIG. 5 to FIG. 7, the first through hole 231 runs through the insulating member 23 in the thickness direction Z of the first wall 211, and is arranged opposite to the pressure relief mechanism 213 in the thickness direction Z of the first wall 211. At a position arranged opposite to the pressure relief mechanism 213, the first through hole 231 can communicate the region in which the pressure relief mechanism 213 is located with the region in which the electrode assembly 22 is located, to form at least a portion of the discharge channel.

In the structures shown in FIG. 5 to FIG. 7, the portion of the supporting member 24 that is not connected to the insulating member 23 may be accommodated in the first through hole 231. Optionally, the portion of the supporting member 24 that is not connected to the insulating member 23 may pass through the first through hole 231.

In some embodiments, a certain gap, e.g., a gap H shown in FIG. 7, may exist between the portion of the supporting member 24 that is not connected to the insulating member 23 and the first wall 211, and the gap H can be configured to form a discharge channel. In some embodiments, when the supporting member 24 is at least partially accommodated in the first through hole 231, the first through hole 231 can still communicate the pressure relief mechanism 213 with the electrode assembly 22.

In the embodiments of the present application, a high-temperature and high-pressure gas inside the battery cell 20 can quickly reach, through the first through hole 231, the region in which the pressure relief mechanism 213 is located, thereby facilitating actuation of the pressure relief mechanism 213 to quickly release the temperature or pressure inside the battery cell 20. At least partially accommodating the supporting member 24 in the first through hole 231 also enables a certain gap to exist between the supporting member 24 and the pressure relief mechanism 213, so that the discharge channel can be kept clear while the electrode assembly 22 is limited from moving toward the first wall 211.

According to some embodiments of the present application, optionally, a surface of the supporting member 24 that faces the electrode assembly 22 is provided with an insulating layer.

In some embodiments, at least the surface of the supporting member 24 that faces the electrode assembly 22 is provided with an insulating layer to improve the performance of insulation between the supporting member 24 and the electrode assembly 22. The insulating layer refers to a structure, on the surface of the supporting member 24, which can play an insulating role, for example, the surface of the supporting member 24 may be coated with an insulating material to form the insulating layer. Optionally, surfaces of the supporting member 24 may each be provided with an insulating layer. Optionally, the supporting member 24 may be made of an insulating material.

The insulating layer can improve the performance of insulation between the supporting member 24 and the electrode assembly 22, and electric energy generated in the electrode assembly 22 is not easily conducted to the first wall 211 even when the electrode assembly 22 comes into contact with the supporting member 24, thereby improving the reliability of the battery cell 20.

According to some embodiments of the present application, optionally, the surface of the insulating member 23 that faces the first wall 211 is provided with a second groove 232, an accommodating space is formed between the second groove 232 and the first wall 211, and the supporting member 24 is accommodated in the accommodating space.

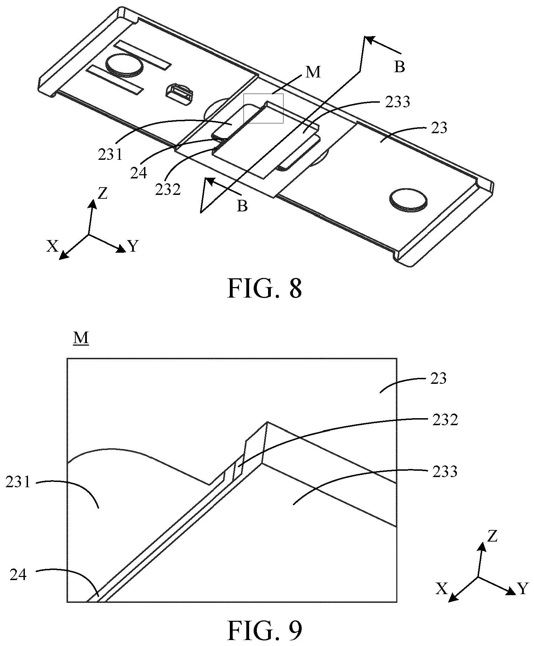

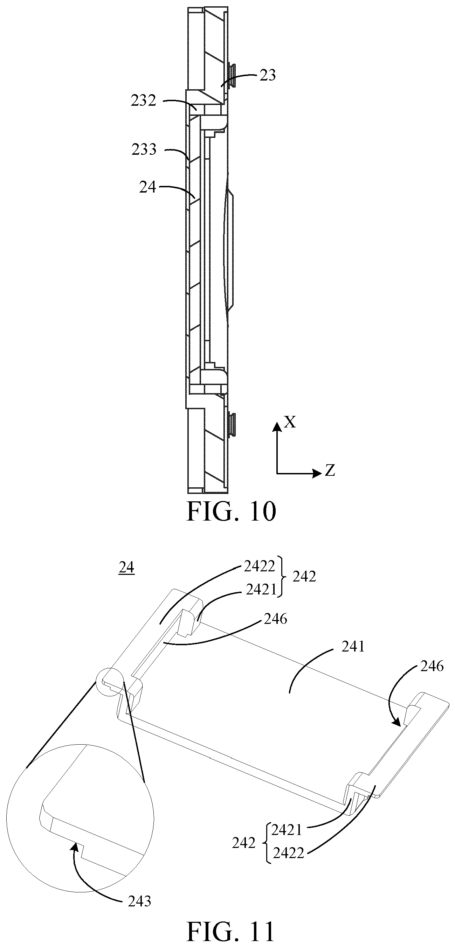

FIG. 8 shows another structure in which the insulating member 23 and the supporting member 24 face a side of the electrode assembly 22 in the thickness direction Z of the first wall 211. FIG. 9 is an enlarged schematic structural diagram of a portion M in FIG. 8. FIG. 10 is a cross-sectional view of the structure in FIG. 9 in a B-B direction.

As shown in FIG. 8 to FIG. 10, an opening of the second groove 232 faces the first wall 211, and a bottom wall and a side wall of the second groove 232 form a protruding structure 233 on a side of the insulating member 23 that faces the electrode assembly 22. In some embodiments, the protruding structure 233 may be made of an insulating material, and optionally, the protruding structure 233 may be integrally formed with the insulating member 23.

A gap exists between the bottom wall of the second groove 232 and the first wall 211, the gap forms an accommodating space, and the supporting member 24 is at least partially accommodated in the accommodating space. Specifically, the portion of the supporting member 24 that is not connected to the insulating member 23 may be accommodated in the accommodating space.

In some embodiments, the insulating member 23 is provided with the first through hole 231, and the second groove 232 may be arranged opposite to the first through hole 231. In the thickness direction Z of the first wall 211, the protruding structure 233 formed by the second groove 232 on the side of the insulating member 23 that faces the electrode assembly 22 may cover a portion of the first through hole 231, a channel that communicates the pressure relief mechanism 213 with the electrode assembly 22 is provided between the second groove 232 and the first through hole 231, and the channel may form at least a portion of the discharge channel.

The protruding structure 233 formed by the second groove 232 on the side of the insulating member 23 that faces the electrode assembly 22 can protect the supporting member 24, so that the supporting member 24 is not easy to fall off to the region in which the electrode assembly 22 is located. In addition, the protruding structure 233 can play an insulating role between the supporting member 24 and the electrode assembly 22, thereby reducing the possibility of the supporting member 24 implementing conduction between the electrode assembly 22 and the first wall 211.

According to some embodiments of the present application, optionally, the second groove 232 has an opening in the length direction Y of the first wall 211 and/or the width direction X of the first wall 211, and the opening is configured to communicate the pressure relief mechanism 213 with the electrode assembly 22.

In the embodiments of the present application, the opening opposite to the bottom wall of the second groove 232 faces the first wall 211. In some embodiments, the second groove 232 may have an opening at at least one end in the length direction Y of the first wall 211. Optionally, an opening exists at at least one end in the width direction X of the first wall 211. Optionally, an opening exists at each of at least one end in the length direction Y of the first wall 211 and at least one end in the width direction X of the first wall 211. In some embodiments, a portion of the side wall of the second groove 232 is an opening, and another portion thereof is connected to the insulating member 23. For example, a portion of a side wall of the second groove 232 in the length direction Y of the first wall 211 is an opening, and the opening communicates the pressure relief mechanism 213 with the electrode assembly 22; optionally, a portion of a side wall of the second groove 232 in the width direction X of the first wall 211 is an opening; and optionally, the portions of the second groove 232 in the length direction Y and the width direction X of the first wall 211 may each be an opening.

For example, the second groove 232 has a side wall in the width direction X of the first wall 211, and has an opening at at least one end in the length direction Y of the first wall 211. In this case, the opening in the length direction Y of the first wall 211 can communicate the pressure relief mechanism 213 with the electrode assembly 22. Optionally, the opening of the second groove 232 in the length direction Y of the first wall 211 can communicate with the first through hole 231. Similarly, the second groove 232 may have a side wall in the length direction Y of the first wall 211, and have an opening at at least one end in the width direction X of the first wall 211. The opening communicates the pressure relief mechanism 213 with the electrode assembly 22. Optionally, an opening at one end of the second groove 232 in the length direction Y of the first wall 211 and an opening at one end of the second groove 232 in the width direction X of the first wall 211 can also communicate the pressure relief mechanism 213 with the electrode assembly 22.

The opening of the second groove 232 in the length direction Y of the first wall 211 and/or the width direction X of the first wall 211 is beneficial to guiding the high-temperature and high-pressure substance inside the battery cell 20 to be quickly discharged toward a direction of the pressure relief mechanism 213, so as to quickly release the temperature or pressure inside the battery cell 20, thereby improving the reliability of the battery cell 20.

According to some embodiments of the present application, optionally, in the thickness direction Z of the first wall 211, a projection of the bottom wall of the second groove 232 covers a projection of the supporting member 24.

As shown in FIG. 8 to FIG. 10, the bottom wall of the second groove 232 is located between the supporting member 24 and the electrode assembly 22, and separates the supporting member 24 from the electrode assembly 22. In the thickness direction Z of the first wall 211, the projection of the bottom wall of the second groove 232 covers the projection of the supporting member 24. In some embodiments, a projection of the protruding structure 233 formed by the bottom wall and the side wall of the second groove 232 on the side of the insulating member 23 that faces the electrode assembly 22 may cover the projection of the supporting member 24.

Covering the projection of the supporting member 24 by the projection of the bottom wall of the second groove 232 can prevent the electrode assembly 22 from easily coming into direct contact with the supporting member 24 during movement toward the first wall 211, thereby strengthening the insulation between the supporting member 24 and the electrode assembly 22 and improving the reliability of the battery cell 20.

According to some embodiments of the present application, optionally, the supporting member 24 includes a supporting wall 241 and at least one connecting portion 242 that are connected to each other, the supporting wall 241 is configured to limit the electrode assembly 22 from moving toward the first wall 211, and the connecting portion 242 is configured to connect the insulating member 23 to the supporting wall 241.

FIG. 11 shows a schematic structural diagram of a supporting member 24. As shown in FIG. 11, the supporting member 24 includes a supporting wall 241 and at least one connecting portion 242, and the supporting wall 241 is connected to the connecting portion 242. With reference to the structures shown in FIG. 5 to FIG. 10, in the thickness direction Z of the first wall 211, the supporting wall 241 is opposite to the pressure relief mechanism 213, and can limit movement of the electrode assembly 22 when the electrode assembly 22 moves toward the first wall 211, thereby reducing the possibility of the electrode assembly 22 blocking the pressure relief mechanism 213.

Connecting the connecting portion 242 to the insulating member 23 can connect the supporting wall 241 to the insulating member 23. Optionally, the supporting wall 241 may be fixedly connected to the connecting portion 242, and the connecting portion 242 is fixedly connected to the insulating member 23. In this case, the connecting wall can fasten the supporting member 24 to the insulating member 23.

In some embodiments, the supporting wall 241 may be a wall perpendicular to the thickness direction Z of the first wall 211, and the connecting portion 242 may be a wall parallel to the thickness direction Z of the first wall 211. In this case, one end of the connecting portion 242 in the thickness direction Z of the first wall 211 is connected to the insulating member 23, and the other end thereof is connected to the supporting wall 241. In this case, a certain gap may exist between the supporting wall 241 and the insulating member 23. Optionally, the supporting wall 241 and the connecting portion 242 may both be walls perpendicular to the thickness direction Z of the first wall 211, and the supporting wall 241 and the connecting portion 242 may be connected on the same plane. In this case, a gap between the supporting wall 241 and the pressure relief mechanism 213 mainly includes the gap between the insulating member 23 and the pressure relief structure.

Connecting the supporting member 24 to the insulating member 23 by using the connecting portion 242 can enable a certain gap to exist between the supporting member 24 and the pressure relief structure, and the supporting member 24 can still reserve at least a portion of the discharge channel for the pressure relief mechanism 213 while limiting movement of the electrode assembly 22, so that the high-temperature and high-pressure substance inside the battery cell 20 can reach the pressure relief mechanism 213 through the discharge channel.

According to some embodiments of the present application, optionally, the connecting portion 242 is clamped to the insulating member 23.

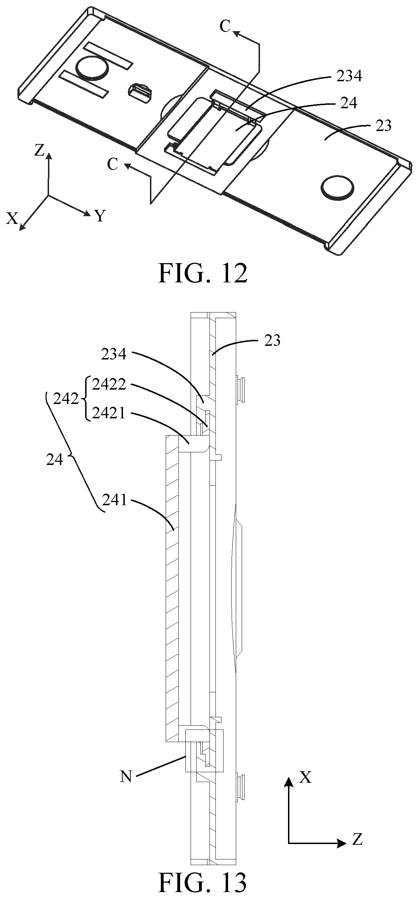

FIG. 12 shows a structure in which the supporting member 24 is clamped to the insulating member 23 by using the connecting portion 242. "Clamping" refers to a connection manner in which the connecting portion 242 of the supporting member 24 and the insulating member 23 limit each other, so that relative positions of the supporting member 24 and the insulating member 23 are fixed.

In a possible implementation, the connecting portion 242 may be at least partially accommodated in a groove of the insulating member 23 through resilience of the supporting member 24, and after the supporting member 24 is restored to an original shape, the groove can limit a portion of the connecting portion 242 that is accommodated in the groove.

In another possible implementation, an avoidance space and a groove may be arranged on the insulating member 23, the connecting portion 242 is switched from a position of the avoidance space to a position of the groove by movement or rotation, and the groove and the connecting wall limit each other, to implement fastening between the insulating supporting member 24 and the insulating member 23.

The implementations above are merely instances, and the clamping manner between the connecting wall and the insulating member 23 may be flexibly set based on actual needs.

Connecting the connecting portion 242 to the insulating member 23 by clamping can relatively conveniently fasten the supporting member 24 to the insulating member 23, and can additionally increase the fastening strength between the supporting member 24 and the insulating member 23, so that the supporting member 24 is not easily detached from the insulating member 23.

According to some embodiments of the present application, optionally, the insulating member 23 is provided with a first groove 235, a direction of an opening of the first groove 235 is perpendicular to the thickness direction Z of the first wall 211, and the connecting portion 242 is at least partially accommodated in the first groove 235.

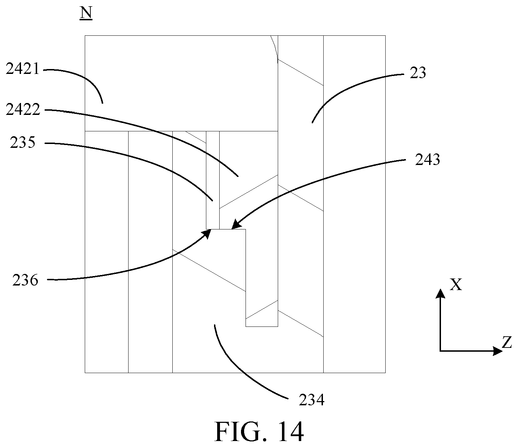

FIG. 13 is a cross-sectional view of the structure in FIG. 12 in a C-C direction. FIG. 14 is an enlarged schematic structural diagram of a portion N in FIG. 13. As shown in FIG. 12 to FIG. 14, the first groove 235 is arranged on the insulating member 23 and forms a certain accommodating space on the insulating member 23, and the connecting portion 242 is at least partially accommodated in the accommodating space formed by the first groove 235.

The direction of the opening of the first groove 235 is perpendicular to the thickness direction Z of the first wall 211, the direction of the opening of the first groove 235 shown in FIG. 12 to FIG. 14 is oriented in the width direction X of the first wall 211, and the supporting member 24 may be fixedly connected to the insulating member 23 in the width direction X of the first wall 211. In some embodiments, the direction of the opening of the first groove 235 may be oriented in the length direction Y of the first wall 211. In this case, the supporting member 24 may be fixedly connected to the insulating member 23 in the length direction Y of the first wall 211. Optionally, the first groove 235 may be arranged in each of the length direction Y and the width direction X of the first wall 211. In this case, the supporting member 24 is fixedly connected to the insulating member 23 in each of the width direction X and the length direction Y of the first wall 211.

In the embodiments shown in FIG. 12 to FIG. 14, the insulating member 23 can limit the movement of the connecting portion 242 in the thickness direction Z of the first wall 211 through the first groove 235, so as to implement the fixed connection between the connecting portion 242 and the insulating member 23, thereby implementing the fixed connection between the supporting member 24 and the insulating member 23.

The first groove 235 may mate with the connecting portion 242. For example, the shape of the accommodating space formed by the first groove 235 and the shape of the portion of the connecting portion 242 that is accommodated in the first groove 235 fit with each other, so that the portion of the connecting wall that is accommodated in the first groove 235 does not easily shake in the first groove 235, and the connection strength between the supporting member 24 and the insulating member 23 can be increased.

The first groove 235 can limit movement of the connecting portion 242, implement a fixed connection between the supporting member 24 and the insulating member 23, and increase the connection strength between the supporting member 24 and the insulating member 23, so that the supporting member 24 is not easily detached from the insulating member 23.

According to some embodiments of the present application, optionally, a surface of the insulating member 23 is provided with a first protrusion 234, and the first groove 235 is arranged in the first protrusion 234.

As shown in FIG. 12 to FIG. 14, a position for arranging the first groove 235 on the insulating member 23 may be thickened to increase the size of the accommodating space formed by the first groove 235, and a thickened portion is the first protrusion 234 arranged on the surface of the insulating member 23. Correspondingly, the portion of the connecting portion 242 that is accommodated in the first groove 235 may also be appropriately thickened to increase the strength of the connecting portion 242.

Arranging the first protrusion 234 on the surface of the insulating member 23 and arranging the first groove 235 in the first protrusion 234 can increase the strength of the insulating member 23 and improve a limiting function between the insulating member 23 and the supporting member 24. In addition, correspondingly thickening the connecting portion 242 can also increase the strength of the supporting member 24, so that the supporting member 24 is not easily damaged when being pressed by the electrode assembly 22, thereby limiting the movement of the electrode assembly 22 to a limited extent.

According to some embodiments of the present application, optionally, a portion of the connecting portion 242 that is accommodated in the first groove 235 is provided with a first step structure 243, the first groove 235 has a second step structure 236, and the first step structure 243 and the second step structure 236 mate with each other.

As shown in FIG. 13 and FIG. 14, specifically, the first groove 235 and the connecting portion 242 may mate with each other through a step structure. For example, in the direction of the opening of the first groove 235, one end of the first groove 235 that is away from the opening is narrower, and one end of the first groove 235 that is close to the opening is wider.

In some embodiments, the first groove 235 may be in interference fit with the connecting wall to increase the connection strength between the insulating member 23 and the connecting wall. For example, the connecting portion 242 may be in interference fit with the first groove 235 in the thickness direction Z of the first wall 211. "Interference fit" means that when the connecting portion 242 is not accommodated in the first groove 235, the size of a portion of the connecting portion 242 that needs to be accommodated in the first groove 235 in the thickness direction Z of the first wall 211 is greater than the size of a corresponding position in the first groove 235 in the thickness direction Z of the first wall 211. In an assembly process, the elasticity of the material of the insulating member 23 is utilized to expand and deform the first groove 235 in the thickness direction Z of the first wall 211 in order to accommodate the connecting portion 242 of the supporting member 24. After being restored, the first groove 235 can generate a force so that at least a portion of the connecting portion 242 is fastened in the first groove 235.

In an assembly process, the narrower portion of the first step structure 243 first passes through the wider portion of the second step structure 236 and then extends into the narrower portion of the second step structure 236, and the mating between the first step structure 243 and the second step structure 236 is beneficial to guiding the connecting wall to be accommodated in the first groove 235, thereby reducing the positioning accuracy in the assembly process.

According to some embodiments of the present application, optionally, the connecting portion 242 is connected to the surface of the insulating member 23 that faces the first wall 211.

In some embodiments, the supporting member 24 may be connected to a surface of the insulating member 23. Specifically, the connecting portion 242 on the supporting member 24 may be connected to a surface of the insulating member 23, for example, may be connected to the surface of the insulating member 23 that faces the first wall 211 in the thickness direction Z of the first wall 211.

As shown in FIG. 5 to FIG. 10, the connecting portion 242 connects the supporting wall 241 to the surface of the insulating member 23 that faces the first wall 211. In the battery cell 20, a portion of the connecting portion 242 that is connected to the insulating member 23 may be located between the insulating member 23 and the first wall 211.

In some embodiments, as shown in FIG. 5 to FIG. 7, the connecting portion 242 may include a portion parallel to the thickness direction Z of the first wall 211, and the portion may pass through the first through hole 231, so that the supporting wall 241 is located on a side of the insulating member 23 that faces the electrode assembly 22 in the thickness direction Z of the first wall 211. In this case, in the length and/or the width direction X of the first wall 211, the projection of the supporting member 24 partially overlaps a projection of the insulating member 23, so that a space additionally occupied by the supporting member 24 can be reduced.

In some embodiments, as shown in FIG. 8 to FIG. 10, the connecting portion 242 may include a portion parallel to the thickness direction Z of the first wall 211, and the portion may be accommodated in the second groove 232. In this case, the bottom wall and the side wall of the second groove 232 can play an insulating role for the connecting portion 242, thereby improving the insulation effect of the insulating member 23 on the supporting member 24.

The connection between the connecting portion 242 and the surface of the insulating member 23 that faces the first wall 211 can enable the supporting member 24 to be fastened by both the first wall 211 and the insulating member 23, so that the supporting member 24 is not easily misaligned when being pressed by the electrode assembly 22, and can play a certain protective role for the pressure relief mechanism 213 at a position opposite to the pressure relief mechanism 213.

According to some embodiments of the present application, optionally, the connecting portion 242 is connected to the surface of the insulating member 23 that faces the electrode assembly 22.

A surface of the connecting portion 242 that faces the first wall 211 in the thickness direction Z of the first wall 211 is connected to the insulating member 23, and a surface of the connecting portion 242 that faces the electrode assembly 22 is connected to the supporting wall 241. In this case, the supporting member 24 is closer to the electrode assembly 22 than the insulating member 23, and can limit the movement of the electrode assembly 22 prior to the insulating member 23, so that a certain gap can be maintained between the electrode assembly 22 and the pressure relief mechanism 213, thereby keeping the discharge channel clear.

The supporting wall 241 can limit deformation of the electrode assembly 22, so that the electrode assembly 22 is difficult to move further toward the pressure relief mechanism 213, and the connecting portion 242 can connect the supporting wall 241 to the insulating member 23. As such, the supporting member 24 can limit the deformation of the electrode assembly 22 at a fixed position, so that a certain gap can be maintained between the electrode assembly 22 and the pressure relief mechanism 213, thereby keeping the discharge channel clear.

According to some embodiments of the present application, optionally, the connecting portion 242 includes at least one first connecting wall 2421 parallel to the thickness direction Z of the first wall 211, and the first connecting wall 2421 is configured to form a gap between the insulating member 23 and the supporting wall 241.

FIG. 11 shows a possible structure of the supporting member 24. As shown in FIG. 11, the first connecting wall 2421 may be a portion on the connecting portion 242 that is parallel to the thickness direction Z of the first wall 211. One end of the first connecting wall 2421 in the thickness direction Z of the first wall 211 is connected to the supporting wall 241, and the other end thereof is connected to the insulating member 23. When the connecting portion 242 is connected to the surface of the insulating member 23 that faces the first wall 211, a certain gap may exist between the supporting wall 241 and the first wall 211; and when the connecting portion 242 is connected to the surface of the insulating member 23 that faces the electrode assembly 22, a gap between the supporting wall 241 and the first wall 211 includes a gap between the supporting wall 241 and the insulating member 23, a gap formed by the first through hole 231 of the insulating member 23, and a gap between the insulating member 23 and the first wall 211.

A gap between the first connecting wall 2421 and the first wall 211 can maintain a certain discharge channel in a region around the pressure relief mechanism 213, so that the high-temperature and high-pressure substance can reach the pressure relief mechanism 213 along the discharge channel, and further the pressure relief mechanism 213 is actuated to discharge the high-temperature and high-pressure substance inside the battery cell 20.

According to some embodiments of the present application, optionally, the connecting portion 242 includes a second connecting wall 2422, and the second connecting wall 2422 connects the first connecting wall 2421 to the insulating member 23.

As shown in FIG. 11, the connecting portion 242 may include the first connecting wall 2421 and the second connecting wall 2422 that are connected to each other. In some embodiments, a plane on which the first connecting wall 2421 is located and a plane on which the second connecting wall 2422 is located are perpendicular to each other. Optionally, the plane on which the first connecting wall 2421 is located and the plane on which the second connecting wall 2422 is located may form a certain angle, and the angle may be an acute angle or an obtuse angle.

In some embodiments, the second connecting wall 2422 may be fixedly connected to a surface of the insulating member 23. In this case, the supporting member 24 may be fixedly connected to the insulating member 23 through the second connecting wall 2422 of the connecting portion 242.

The second connecting wall 2422 can increase the connection area between the supporting member 24 and the insulating member 23. This is beneficial to increasing the connection strength between the supporting member 24 and the insulating member 23, so that the supporting member 24 is not easily deformed or detached from the insulating member 23 when being pressed by the electrode assembly 22, thereby effectively limiting the movement of the electrode assembly 22.

According to some embodiments of the present application, optionally, the at least one first connecting wall 2421 includes two first connecting walls 2421, and the two first connecting walls 2421 are arranged opposite to each other at edges of the supporting wall 241.

In the supporting member 24 shown in FIG. 11, the supporting member 24 may include two first connecting walls 2421, and the two first connecting walls 2421 are respectively arranged at edges of the supporting wall 241 in the width direction X of the first wall 211, i.e., two ends of the supporting wall 241 in the width direction X of the first wall 211 may each be connected to one of the first connecting walls 2421. One end of the first connecting wall 2421 in the thickness direction Z of the first wall 211 is connected to the supporting wall 241, and the other end thereof is connected to the second connecting wall 2422 or the insulating member 23. In some embodiments, the plane on which the second connecting wall 2422 is located may be parallel to a plane on which the supporting wall 241 is located, and is staggered with the plane on which the supporting wall 241 is located in the thickness direction Z of the first wall 211.

Optionally, the two first connecting walls 2421 may alternatively be arranged at both ends of the supporting wall 241 in the length direction Y of the first wall 211.

The first connecting walls 2421 arranged opposite to each other can make the connection between the supporting member 24 and the insulating member 23 more stable, and the supporting member 24 and the insulating member 23 less prone to deformation in a process of limiting the movement of the electrode assembly 22, thereby helping better limit the movement of the electrode assembly 22.

According to some embodiments of the present application, optionally, the first connecting walls 2421 each has a run-through hole 246, and the run-through hole 246 is configured to communicate the pressure relief mechanism 213 with the electrode assembly 22.

As shown in FIG. 11, the first connecting walls 2421 each may have a run-through hole 246 that runs through the first connecting wall 2421 in the thickness direction Z of the first connecting wall 2421. For example, in the width direction X of the first wall 211, the first connecting walls 2421 are arranged at both ends of the supporting wall 241, and the run-through holes 246 may run through the first connecting walls 2421 in the width direction X of the first wall 211 and communicate with each other in the width direction X of the first wall 211 to form at least a portion of the discharge channel, thereby communicating the pressure relief mechanism 213 with the electrode assembly 22.

The run-through hole 246 can increase a discharge channel and a discharge path inside the battery cell 20, and this is beneficial to guiding the high-temperature and high-pressure substance inside the battery cell 20 to flow toward the direction of the pressure relief mechanism 213, so that the pressure relief mechanism 213 can be actuated to quickly discharge the high-temperature and high-pressure substance, and the possibility of more serious explosion accidents can be reduced, thereby improving the reliability of the battery cell 20.

According to some embodiments of the present application, optionally, a projection of the supporting wall 241 in the thickness direction Z of the first wall 211 covers a projection of the pressure relief mechanism 213 in the thickness direction Z of the first wall 211.

In the embodiments of the present application, the supporting member 24 is arranged opposite to the pressure relief mechanism 213, and in the thickness direction Z of the first wall 211, the projection of the supporting wall 241 covers the projection of the pressure relief mechanism 213. In this case, the supporting member 24 can separate the pressure relief mechanism 213 from the electrode assembly 22, and the high-temperature and high-pressure substance inside the battery cell 20 can move from a gap between the supporting member 24 and the first wall 211 to the pressure relief mechanism 213 and be discharged out of the battery cell 20 when the pressure relief mechanism 213 is actuated.

The supporting member 24 can protect the pressure relief mechanism 213 in a larger range, so that during movement toward the first wall 211, the electrode assembly 22 is limited by the supporting member 24 in one aspect, and is difficult to directly move to the pressure relief mechanism 213 to block the pressure relief mechanism 213 in another aspect, thereby keeping the discharge channel inside the battery cell 20 clear and improving the reliability of the battery cell 20.

According to some embodiments of the present application, optionally, the supporting member 24 is connected to a surface of the first wall 211 that faces the electrode assembly 22 in the thickness direction Z of the first wall 211.

The supporting member 24 is arranged inside the battery cell 20 and is connected to a surface of the first wall 211 that faces the inside of the battery cell 20, and the surface may alternatively be a surface of the first wall 211 that faces the electrode assembly 22. The supporting member 24 is arranged opposite to the pressure relief mechanism 213. At a position opposite to the pressure relief mechanism 213, a certain gap exists between the supporting member 24 and the pressure relief mechanism 213 in the thickness direction Z of the first wall 211.

In some embodiments, a surface of the supporting member 24 that faces the electrode assembly 22 is provided with an insulating layer to reduce the possibility of the supporting member 24 implementing conduction between the electrode assembly 22 and the first wall 211.

The connection between the supporting member 24 and the first wall 211 can implement more direct protection on the pressure relief mechanism 213, thereby reducing the possibility of blocking the pressure relief mechanism 213 during the movement of the electrode assembly 22 toward the first wall 211, and helping improve the reliability of the battery cell 20.

According to some embodiments of the present application, optionally, the supporting member 24 includes a supporting wall 241 and at least one connecting portion 242 that are connected to each other, the supporting wall 241 is configured to limit the electrode assembly 22 from moving toward the first wall 211, and the connecting portion 242 is configured to connect the first wall 211 to the supporting wall 241.

The supporting member 24 may be of the structure shown in FIG. 11. When the supporting member 24 is connected to the first wall 211, the connecting portion 242 is connected to the first wall 211, the supporting wall 241 is opposite to the pressure relief mechanism 213, and a certain gap exists between the supporting wall 241 and the pressure relief mechanism 213 in the thickness direction Z of the first wall 211, and the gap can form at least a portion of the discharge channel.

The connecting portion 242 in the supporting member 24 can implement the connection between the first wall 211 and the supporting member 24, and the supporting wall 241 can keep the discharge channel inside the battery cell 20 clear while limiting the movement of the electrode assembly 22, so that the pressure relief mechanism 213 can be actuated under the action of the high-temperature and high-pressure substance inside the battery cell 20.

According to some embodiments of the present application, optionally, the connecting portion 242 includes at least one first connecting wall 2421 parallel to the thickness direction Z of the first wall 211, and the first connecting wall 2421 is configured to form a gap between the insulating member 23 first wall 211 and the supporting wall 241.

The first connecting wall 2421 may be a portion on the connecting portion 242 that is parallel to the thickness direction Z of the first wall 211. One end of the first connecting wall 2421 in the thickness direction Z of the first wall 211 is connected to the supporting wall 241, and the other end thereof is connected to first wall 211. The first connecting wall 2421 has a certain length in the thickness direction Z of the first wall 211, so that a certain gap can be formed between the supporting wall 241 and the first wall 211.

A gap between the first connecting wall 2421 and the first wall 211 can maintain a certain discharge channel in a region around the pressure relief mechanism 213, so that the high-temperature and high-pressure substance can reach the pressure relief mechanism 213 along the discharge channel, and further the pressure relief mechanism 213 is actuated to discharge the high-temperature and high-pressure substance inside the battery cell 20.

According to some embodiments of the present application, optionally, the connecting portion 242 includes a second connecting wall 2422, and the second connecting wall 2422 connects the first connecting wall 2421 to the insulating member 23 first wall 211.

The connecting portion 242 may include the first connecting wall 2421 and the second connecting wall 2422 that are connected to each other. In some embodiments, a plane on which the first connecting wall 2421 is located and a plane on which the second connecting wall 2422 is located are perpendicular to each other. Optionally, the plane on which the first connecting wall 2421 is located and the plane on which the second connecting wall 2422 is located may form a certain angle, and the angle may be an acute angle or an obtuse angle.

In some embodiments, the second connecting wall 2422 may be fixedly connected to a surface of the first wall 211. In this case, the supporting member 24 may be fixedly connected to the first wall 211 through the second connecting wall 2422 of the connecting portion 242.

The second connecting wall 2422 can increase the connection area between the supporting member 24 and the insulating member 23. This is beneficial to increasing the connection strength between the supporting member 24 and the first wall 211, so that the supporting member 24 is not easily deformed or detached from the insulating member 23 when being pressed by the electrode assembly 22, thereby effectively limiting the movement of the electrode assembly 22.

According to some embodiments of the present application, optionally, the at least one first connecting wall 2421 includes two first connecting walls 2421, and the two first connecting walls 2421 are arranged opposite to each other at edges of the supporting wall 241.

The supporting member 24 may include two first connecting walls 2421, and the two first connecting walls 2421 are respectively arranged at edges of the supporting wall 241 in the width direction X of the first wall 211, i.e., two ends of the supporting wall 241 in the width direction X of the first wall 211 may each be connected to one of the first connecting walls 2421. One end of the first connecting wall 2421 in the thickness direction Z of the first wall 211 is connected to the supporting wall 241, and the other end thereof is connected to the second connecting wall 2422 or the first wall 211. In some embodiments, the plane on which the second connecting wall 2422 is located may be parallel to a plane on which the supporting wall 241 is located, and is staggered with the plane on which the supporting wall 241 is located in the thickness direction Z of the first wall 211.

Optionally, the two first connecting walls 2421 may alternatively be arranged at both ends of the supporting wall 241 in the length direction Y of the first wall 211.

The first connecting walls 2421 arranged opposite to each other can make the connection between the supporting member 24 and the first wall 211 more stable, and the supporting member 24 and the first wall 211 less prone to deformation in a process of limiting the movement of the electrode assembly 22, thereby helping better limit the movement of the electrode assembly 22.

According to some embodiments of the present application, optionally, the first connecting walls 2421 each has a run-through hole 246, and the run-through hole 246 is configured to communicate the pressure relief mechanism 213 with the electrode assembly 22.

The first connecting walls 2421 each may have a run-through hole 246 that runs through the first connecting wall 2421 in the thickness direction Z of the first connecting wall 2421. For example, in the width direction X of the first wall 211, the first connecting walls 2421 are arranged at both ends of the supporting wall 241, and the run-through holes 246 may run through the first connecting walls 2421 in the width direction X of the first wall 211 and communicate with each other in the width direction X of the first wall 211 to form at least a portion of the discharge channel, thereby communicating the pressure relief mechanism 213 with the electrode assembly 22.

The run-through hole 246 can increase a discharge channel and a discharge path inside the battery cell 20, and this is beneficial to guiding the high-temperature and high-pressure substance inside the battery cell 20 to flow toward the direction of the pressure relief mechanism 213, so that the pressure relief mechanism 213 can be actuated to quickly discharge the high-temperature and high-pressure substance, and the possibility of more serious explosion accidents can be reduced, thereby improving the reliability of the battery cell 20.

According to some embodiments of the present application, optionally, a projection of the supporting wall 241 in the thickness direction Z of the first wall 211 covers a projection of the pressure relief mechanism 213 in the thickness direction Z of the first wall 211.

In the embodiments of the present application, the supporting member 24 is arranged opposite to the pressure relief mechanism 213, and in the thickness direction Z of the first wall 211, the projection of the supporting wall 241 covers the projection of the pressure relief mechanism 213. In this case, the supporting member 24 can separate the pressure relief mechanism 213 from the electrode assembly 22, and the high-temperature and high-pressure substance inside the battery cell 20 can move from a gap between the supporting member 24 and the first wall 211 to the pressure relief mechanism 213 and be discharged out of the battery cell 20 when the pressure relief mechanism 213 is actuated.

The supporting member 24 can protect the pressure relief mechanism 213 in a larger range, so that during movement toward the first wall 211, the electrode assembly 22 is limited by the supporting member 24 in one aspect, and is difficult to directly move to the pressure relief mechanism 213 to block the pressure relief mechanism 213 in another aspect, thereby keeping the discharge channel inside the battery cell 20 clear and improving the reliability of the battery cell 20.

According to some embodiments of the present application, optionally, the battery cell 20 includes an insulating member 23, and the insulating member 23 is arranged between the electrode assembly 22 and the first wall 211.

In some embodiments, the insulating member 23 may be arranged between the supporting member 24 and the electrode assembly 22. Optionally, the insulating member 23 may have a first through hole 231, and the supporting member 24 is at least partially accommodated in the first through hole 231. Optionally, the insulating member 23 may be provided with a second groove 232, an opening of the second groove 232 faces the first wall 211, and the supporting member 24 is at least partially accommodated in the second groove 232.

The insulating member 23 can play an insulating role to insulate the electrode assembly 22 from the first wall 211, thereby reducing the possibility of conduction between the electrode assembly 22 and the first wall 211.

According to some embodiments of the present application, optionally, the insulating member 23 includes a first through hole 231, the first through hole 231 is arranged opposite to the pressure relief mechanism 213 in the thickness direction Z of the first wall 211, and the supporting member 24 is at least partially accommodated in the first through hole 231.

The first through hole 231 runs through the insulating member 23 in the thickness direction Z of the first wall 211, and is arranged opposite to the pressure relief mechanism 213 in the thickness direction Z of the first wall 211. At a position arranged opposite to the pressure relief mechanism 213, the first through hole 231 can communicate the region in which the pressure relief mechanism 213 is located with the region in which the electrode assembly 22 is located, to form at least a portion of the discharge channel.

The supporting member 24 may be entirely accommodated in the first through hole 231 of the insulating member 23. Specifically, the supporting member 24 is connected to the first wall 211, and the first through hole 231 may avoid the supporting member 24 in a region in which the supporting member 24 is located. Optionally, the supporting member 24 may be partially accommodated in the first through hole 231 of the insulating member 23. Specifically, one side of the supporting member 24 in the thickness direction Z of the first wall 211 is connected to the first wall 211, and the other side thereof is located on one side of the insulating member 23 that faces the electrode assembly 22, so that the supporting member 24 can pass through the first through hole 231 in the thickness direction Z of the first wall 211.

In some embodiments, a certain gap exists between a portion of the supporting member 24 that is not connected to the first wall 211 and the first wall 211, and the gap can be configured to form a discharge channel. In some embodiments, when the supporting member 24 is at least partially accommodated in the first through hole 231, the first through hole 231 can still communicate the pressure relief mechanism 213 with the electrode assembly 22.

In the embodiments of the present application, a high-temperature and high-pressure gas inside the battery cell 20 can quickly reach, through the first through hole 231, the region in which the pressure relief mechanism 213 is located, thereby facilitating actuation of the pressure relief mechanism 213 to quickly release the temperature or pressure inside the battery cell 20. At least partially accommodating the supporting member 24 in the first through hole 231 also enables a certain gap to exist between the supporting member 24 and the pressure relief mechanism 213, so that the discharge channel can be kept clear while the electrode assembly 22 is limited from moving toward the first wall 211.

According to some embodiments of the present application, optionally, a surface of the supporting member 24 that faces the electrode assembly 22 is provided with an insulating layer.

In some embodiments, at least the surface of the supporting member 24 that faces the electrode assembly 22 is provided with an insulating layer to improve the performance of insulation between the supporting member 24 and the electrode assembly 22. The insulating layer refers to a structure, on the surface of the supporting member 24, which can play an insulating role, for example, the surface of the supporting member 24 may be coated with an insulating material to form the insulating layer. Optionally, surfaces of the supporting member 24 may each be provided with an insulating layer. Optionally, the supporting member 24 may be made of an insulating material.

The insulating layer can improve the performance of insulation between the supporting member 24 and the electrode assembly 22, and electric energy generated in the electrode assembly 22 is not easily conducted to the first wall 211 even when the electrode assembly 22 comes into contact with the supporting member 24, thereby improving the reliability of the battery cell 20.

According to some embodiments of the present application, optionally, the surface of the insulating member 23 that faces the first wall 211 is provided with a second groove 232, an accommodating space is formed between the second groove 232 and the first wall 211, and the supporting member 24 is accommodated in the accommodating space.

An opening of the second groove 232 faces the first wall 211, and a bottom wall and a side wall of the second groove 232 form a protruding structure 233 on a side of the insulating member 23 that faces the electrode assembly 22. In some embodiments, the protruding structure 233 may be made of an insulating material, and optionally, the protruding structure 233 may be integrally formed with the insulating member 23.

A gap exists between the bottom wall of the second groove 232 and the first wall 211, the gap forms an accommodating space, and the supporting member 24 is at least partially accommodated in the accommodating space.

In some embodiments, the insulating member 23 is provided with the first through hole 231, and the second groove 232 may be arranged opposite to the first through hole 231. In the thickness direction Z of the first wall 211, the protruding structure 233 formed by the second groove 232 on the side of the insulating member 23 that faces the electrode assembly 22 may cover a portion of the first through hole 231. In this case, a channel that communicates the pressure relief mechanism 213 with the electrode assembly 22 is provided between the second groove 232 and the first through hole 231, and the channel may form at least a portion of the discharge channel.

The protruding structure 233 formed by the second groove 232 on the side of the insulating member 23 that faces the electrode assembly 22 can protect the supporting member 24, so that the supporting member 24 is not easy to fall off to the region in which the electrode assembly 22 is located. In addition, the protruding structure 233 can play an insulating role between the supporting member 24 and the electrode assembly 22, thereby reducing the possibility of the supporting member 24 implementing conduction between the electrode assembly 22 and the first wall 211.

According to some embodiments of the present application, optionally, the second groove 232 has an opening in the length direction Y of the first wall 211 and/or the width direction X of the first wall 211, and the opening is configured to communicate the pressure relief mechanism 213 with the electrode assembly 22.

In the embodiments of the present application, the opening opposite to the bottom wall of the second groove 232 faces the first wall 211. In some embodiments, the second groove 232 may have an opening at at least one end in the length direction Y of the first wall 211. Optionally, an opening exists at at least one end in the width direction X of the first wall 211. Optionally, an opening exists at each of at least one end in the length direction Y of the first wall 211 and at least one end in the width direction X of the first wall 211. In some embodiments, a portion of the side wall of the second groove 232 is an opening, and another portion thereof is connected to the insulating member 23. For example, a portion of a side wall of the second groove 232 in the length direction Y of the first wall 211 is an opening, and the opening communicates the pressure relief mechanism 213 with the electrode assembly 22; optionally, a portion of a side wall of the second groove 232 in the width direction X of the first wall 211 is an opening; and optionally, the portions of the second groove 232 in the length direction Y and the width direction X of the first wall 211 may each be an opening.

For example, the second groove 232 has a side wall in the width direction X of the first wall 211, and has an opening at at least one end in the length direction Y of the first wall 211. In this case, the opening in the length direction Y of the first wall 211 can communicate the pressure relief mechanism 213 with the electrode assembly 22. Optionally, the opening of the second groove 232 in the length direction Y of the first wall 211 can communicate with the first through hole 231. Similarly, the second groove 232 may have a side wall in the length direction Y of the first wall 211, and have an opening at at least one end in the width direction X of the first wall 211. The opening communicates the pressure relief mechanism 213 with the electrode assembly 22. Optionally, an opening at one end of the second groove 232 in the length direction Y of the first wall 211 and an opening at one end of the second groove 232 in the width direction X of the first wall 211 can also communicate the pressure relief mechanism 213 with the electrode assembly 22.

The opening of the second groove 232 in the length direction Y of the first wall 211 and/or the width direction X of the first wall 211 is beneficial to guiding the high-temperature and high-pressure substance inside the battery cell 20 to be quickly discharged toward a direction of the pressure relief mechanism 213, so as to quickly release the temperature or pressure inside the battery cell 20, thereby improving the reliability of the battery cell 20.

According to some embodiments of the present application, optionally, in the thickness direction Z of the first wall 211, a projection of the bottom wall of the second groove 232 covers a projection of the supporting member 24.

The bottom wall of the second groove 232 is located between the supporting member 24 and the electrode assembly 22, and separates the supporting member 24 from the electrode assembly 22. In the thickness direction Z of the first wall 211, the projection of the bottom wall of the second groove 232 covers the projection of the supporting member 24. In some embodiments, a projection of the protruding structure 233 formed by the bottom wall and the side wall of the second groove 232 on the side of the insulating member 23 that faces the electrode assembly 22 may cover the projection of the supporting member 24.

Covering the projection of the supporting member 24 by the projection of the bottom wall of the second groove 232 can prevent the electrode assembly 22 from easily coming into direct contact with the supporting member 24 during movement toward the first wall 211, thereby strengthening the insulation between the supporting member 24 and the electrode assembly 22 and improving the reliability of the battery cell 20.

According to some embodiments of the present application, optionally, a melting point of the supporting member 24 is higher than a melting point of the insulating member 23.

In a later stage of thermal runaway, the electrode assembly 22 may move toward the first wall 211 when being driven by the high-temperature and high-pressure substance or even abut against the insulating member 23. The insulating member 23 is fused and softened under the action of the high-temperature and high-pressure substance, and is easily deformed when the electrode assembly 22 further moves toward the first wall 211, and blocks an original discharge channel. Consequently, the high-temperature and high-pressure substance cannot reach the pressure relief mechanism 213 through the discharge channel. In the embodiments of the present application, the melting point of the supporting member 24 is higher than the melting point of the insulating member 23. In the same temperature environment, the supporting member 24 is less prone to being fused or melted than the insulating member 23, can maintain an original shape and position inside the battery cell 20, and can limit the electrode assembly 22 moving toward the pressure relief mechanism 213, so that the electrode assembly 22 is difficult to move to a position at which the electrode assembly 22 blocks the discharge channel, thereby limiting the deformation of the discharge channel, providing a discharge channel reaching the pressure relief mechanism 213 for the high-temperature and high-pressure substance, and helping improve the reliability of the battery cell 20.

According to some embodiments of the present application, optionally, the melting point of the supporting member 24 is greater than 100°C.

In an example, the material of the supporting member 24 may be a single material. For example, the material of the supporting member 24 is a single material such as an aluminum material or a copper material. In this case, the supporting member 24 has a fixed melting point.

In another example, the material of the supporting member 24 may be a composite material. For example, the supporting member 24 may be a mixed material of an aluminum material and a copper material. In this case, the supporting member 24 does not have a fixed melting point, i.e., the melting point of the supporting member 24 is a melting point range of various materials. For example, the melting point of the aluminum material is 660°C, and the melting point of copper is 1083°C. In this case, the melting point range of the supporting member 24 is 660°C to 1083°C. That a melting point of the supporting member 24 is higher than a melting point of the insulating member 23 may be understood as follows: the lowest melting point in the melting point range of the supporting member 24 is higher than the melting point of the insulating member 23.

For example, for a positive electrode material of the battery cell 20 being a compound having an olivine structure, the melting point of the supporting member 24 may be greater than 150°C, so that a thermal runaway gas can smoothly reach the pressure relief mechanism 213 before a valve of the pressure relief mechanism 213 is opened. Further, optionally, the melting point of the supporting member 24 is greater than 500°C, so that the battery cell 20 can still maintain mechanical strength during thermal runaway. The compound having the olivine structure may be selected from lithium iron phosphate, lithium manganese iron phosphate, or a mixture of lithium iron phosphate and lithium manganese iron phosphate.

For another example, for a positive electrode material of the battery cell 20 containing a layered compound, the melting point of the supporting member 24 may be greater than 100 °C, so that a thermal runaway gas can smoothly reach the pressure relief mechanism 213 before a valve of the pressure relief mechanism 213 is opened. Further, optionally, the melting point of the supporting member 24 is greater than 400°C, so that the battery cell 20 can still maintain mechanical strength during thermal runaway. The layered compound may be selected from a ternary layered material of lithium nickel cobalt manganese oxide, or a mixture of lithium iron phosphate and the ternary layered material of lithium nickel cobalt manganese oxide, or a mixture of lithium manganese iron and the ternary layered material of lithium nickel cobalt manganese oxide.

Optionally, the material of the supporting member 24 may be a high temperature-resistant material. For example, the material of the supporting member 24 may include at least one hard material of metal, graphite, polyfluoroalkoxy, mica, ceramic, or the like.

In the embodiments, using a supporting member 24 with a melting point greater than 100°C is beneficial to preventing the supporting member 24 from being easily melted upon thermal runaway of the battery cell 20, and then a gas discharge channel communicating with the pressure relief mechanism 213 can be further formed between the first wall 211 and the electrode assembly 22, so that a thermal runaway gas can be discharged to the outside of the battery cell 20 through the pressure relief mechanism 213 in time, thereby helping improve the reliability of the battery cell 20.

An embodiment of the present application further provides a battery, including the battery cell 20 according to any one of the above embodiments.

An embodiment of the present application further provides an electric apparatus, including the battery according to any one of the above embodiments, and the battery is configured to supply electric energy to the electric apparatus.

The present application provides a battery cell 20, including a casing 21, a pressure relief mechanism 213, an electrode assembly 22, and a current supporting member 24. The electrode assembly 22 is accommodated in the casing 21, the casing 21 has a first wall 211, and the pressure relief mechanism 213 is arranged on the first wall 211. The supporting member 24 is arranged opposite to the pressure relief mechanism 213 and configured to limit the electrode assembly 22 from moving toward the first wall 211. The supporting member 24 may include a connecting portion 242 and a supporting wall 241. In some embodiments, the connecting portion 242 may be connected to the first wall 211. In some other embodiments, the battery cell 20 may include an insulating member 23, and the connecting portion 242 is connected to the insulating member 23. For example, the connecting portion 242 may be connected to a surface of the insulating member 23 that faces the first wall 211, the insulating member 23 has a first through hole 231, and the supporting member 24 is at least partially accommodated in the first through hole 231. Optionally, the insulating member 23 is provided with a protruding structure 233, and a projection of the protruding structure 233 in the thickness direction Z of the first wall 211 covers a projection of the supporting member 24 in the thickness direction Z of the first wall 211. Optionally, the insulating member 23 is provided with a first protrusion 234, the first protrusion 234 has a first groove 235, and the connecting portion 242 of the supporting member 24 is at least partially accommodated in the first groove 235, so that the supporting member 24 is clamped to the insulating member 23.

The above descriptions are merely specific implementations of the present application, and are not intended to limit the protection scope of the present application. The changes or replacements readily figured out by those skilled in the art within the technical scope disclosed in the present application shall all fall within the protection scope of the present application. Therefore, the protection scope of the present application should be subject to the protection scope of the claims.

## Claims

1. A battery cell, **characterized by** comprising:
a casing, having a first wall;
a pressure relief mechanism, arranged on the first wall;
an electrode assembly, accommodated in the casing; and
a supporting member, arranged opposite to the pressure relief mechanism and configured to limit the electrode assembly from moving toward the first wall.

2. The battery cell according to claim 1, wherein
a discharge channel that communicates the pressure relief mechanism with the electrode assembly is provided between the supporting member and the pressure relief mechanism.

3. The battery cell according to claim 1 or 2, comprising:
an insulating member, arranged between the electrode assembly and the first wall, the supporting member being connected to the insulating member.

4. The battery cell according to claim 3, wherein
the supporting member is arranged between the first wall and the insulating member.

5. The battery cell according to claim 3 or 4, wherein
the supporting member is connected to a surface of the insulating member that faces the first wall.

6. The battery cell according to claim 3, wherein
the insulating member comprises a first through hole, the first through hole is arranged opposite to the pressure relief mechanism in the thickness direction of the first wall, and the supporting member is at least partially accommodated in the first through hole.

7. The battery cell according to claim 6, wherein
a surface of the supporting member that faces the electrode assembly is provided with an insulating layer.

8. The battery cell according to any one of claims 3 to 7, wherein
the surface of the insulating member that faces the first wall is provided with a second groove, an accommodating space is formed between the second groove and the first wall, and the supporting member is accommodated in the accommodating space.

9. The battery cell according to claim 8, wherein
the second groove has an opening in the length direction of the first wall and/or the width direction of the first wall, and the opening is configured to communicate the pressure relief mechanism with the electrode assembly.

10. The battery cell according to claim 8 or 9, wherein
in the thickness direction of the first wall, a projection of a bottom wall of the second groove covers a projection of the supporting member.

11. The battery cell according to any one of claims 3 to 10, wherein
the supporting member comprises a supporting wall and at least one connecting portion that are connected to each other, the supporting wall is configured to limit the electrode assembly from moving toward the first wall, and the connecting portion is configured to connect the insulating member to the supporting wall.

12. The battery cell according to claim 11, wherein
the connecting portion is clamped to the insulating member.

13. The battery cell according to claim 11 or 12, wherein
the insulating member is provided with a first groove, a direction of an opening of the first groove is perpendicular to the thickness direction of the first wall, and the connecting portion is at least partially accommodated in the first groove.

14. The battery cell according to claim 13, wherein
a surface of the insulating member is provided with a first protrusion, and the first groove is arranged in the first protrusion.

15. The battery cell according to claim 13 or 14, wherein
a portion of the connecting portion that is accommodated in the first groove is provided with a first step structure, the first groove has a second step structure, and the first step structure and the second step structure mate with each other.

16. The battery cell according to claim 11, wherein
the connecting portion is connected to the surface of the insulating member that faces the first wall.

17. The battery cell according to claim 11, wherein
the connecting portion is connected to a surface of the insulating member that faces the electrode assembly.

18. The battery cell according to any one of claims 11 to 17, wherein
the connecting portion comprises at least one first connecting wall parallel to the thickness direction of the first wall, and the first connecting wall is configured to form a gap between the insulating member and the supporting wall.

19. The battery cell according to claim 18, wherein
the connecting portion comprises a second connecting wall, and the second connecting wall connects the first connecting wall to the insulating member.

20. The battery cell according to claim 18 or 19, wherein
the at least one first connecting wall comprises two first connecting walls, and the two first connecting walls are arranged opposite to each other at edges of the supporting wall.

21. The battery cell according to any one of claims 18 to 20, wherein
the first connecting walls each have a run-through hole, and the run-through hole is configured to communicate the pressure relief mechanism with the electrode assembly.

22. The battery cell according to any one of claims 18 to 21, wherein
a projection of the supporting wall in the thickness direction of the first wall covers a projection of the pressure relief mechanism in the thickness direction of the first wall.

23. The battery cell according to claim 1 or 2, wherein
the supporting member is connected to a surface of the first wall that faces the electrode assembly in the thickness direction of the first wall.

24. The battery cell according to claim 23, wherein
the supporting member comprises a supporting wall and at least one connecting portion that are connected to each other, the supporting wall is configured to limit the electrode assembly from moving toward the first wall, and the connecting portion is configured to connect the first wall to the supporting wall.

25. The battery cell according to claim 24, wherein
the connecting portion comprises at least one first connecting wall parallel to the thickness direction of the first wall, and the first connecting wall is configured to form a gap between the first wall and the supporting wall.

26. The battery cell according to claim 25, wherein
the connecting portion comprises a second connecting wall, and the second connecting wall connects the first connecting wall to the first wall.

27. The battery cell according to claim 25 or 26, wherein
the at least one first connecting wall comprises two first connecting walls, and the two first connecting walls are arranged opposite to each other at edges of the supporting wall.

28. The battery cell according to any one of claims 25 to 27, wherein
the first connecting walls each have a run-through hole, and the run-through hole is configured to communicate the pressure relief mechanism with the electrode assembly.

29. The battery cell according to any one of claims 24 to 28, wherein
a projection of the supporting wall in the thickness direction of the first wall covers a projection of the pressure relief mechanism in the thickness direction of the first wall.

30. The battery cell according to any one of claims 23 to 29, comprising:
an insulating member, arranged between the electrode assembly and the first wall.

31. The battery cell according to claim 30, wherein
the insulating member comprises a first through hole, the first through hole is arranged opposite to the pressure relief mechanism in the thickness direction of the first wall, and the supporting member is at least partially accommodated in the first through hole.

32. The battery cell according to claim 31, wherein
a surface of the supporting member that faces the electrode assembly is provided with an insulating layer.

33. The battery cell according to any one of claims 30 to 32, wherein
the surface of the insulating member that faces the first wall is provided with a second groove, an accommodating space is formed between the second groove and the first wall, and the supporting member is accommodated in the accommodating space.

34. The battery cell according to claim 33, wherein
the second groove has an opening in the length direction of the first wall and/or the width direction of the first wall, and the opening is configured to communicate the pressure relief mechanism with the electrode assembly.

35. The battery cell according to claim 33 or 34, wherein
in the thickness direction of the first wall, a projection of a bottom wall of the second groove covers a projection of the supporting member.

36. The battery cell according to any one of claims 3 to 35, wherein
a melting point of the supporting member is higher than a melting point of the insulating member.

37. The battery cell according to claim 36, wherein
the melting point of the supporting member is greater than 100°C.

38. A battery, **characterized by** comprising:
the battery cell according to any one of claims 1 to 37.

39. An electric apparatus, **characterized by** comprising the battery according to claim 38, wherein the battery is configured to supply electric energy to the electric apparatus.
